# EUROPEAN PATENT SPECIFICATION

(11) **EP 3 579 505 B1**
(45) Date of publication and mention of the grant of the patent: **26.01.2022**
(21) Application number: 17895073.9
(22) Date of filing: 22.12.2017
(51) Int. Cl.: H04L 12/24, H04L 12/851

(54) **ORCHESTRATION AND MANAGEMENT SYSTEM AND NETWORK SLICE PROCESSING METHOD**
ORCHESTRIERUNGS- UND VERWALTUNGSSYSTEM UND NETZWERKSCHICHTVERARBEITUNGSVERFAHREN
SYSTÈME D'ORCHESTRATION ET DE GESTION ET PROCÉDÉ DE TRAITEMENT DE TRANCHE DE RÉSEAU

(30) Priority: 04.02.2017 CN 201710064200
(43) Date of publication of application: 11.12.2019
(73) Proprietor: ZTE Corporation, Shenzhen, Guangdong 518057 (CN)
(72) Inventor: CHEN, Dong, Shenzhen Guangdong 518057 (CN)
(74) Representative: Deambrogi, Edgardo
(86) International application number: PCT/CN2017/117993
(87) International publication number: WO 2018/141183

(56) References cited:
- WO-A1-2016/192637
- US-A1- 2013 007 232
- AKIHIKO NAKAO 5GMF NETWORK ARCHITECTURE COMMITTEE / THE UNIVERSITY OF TOKYO JAPAN: "Draft deliverable of Network softwarization for IMT-2020 networks;IMT-I-096r1", ITU-T DRAFT; STUDY PERIOD 2013-2016; FOCUS GROUP IMT-2020; SERIES IMT-I-096R1, INTERNATIONAL TELECOMMUNICATION UNION, GENEVA ; CH , vol. imt-2020 22 October 2015 (2015-10-22), pages 1-64, XP044242007, Retrieved from the Internet: URL:https://extranet.itu.int/ITU-T/focusgr oups/imt-2020/FG IMT2020 Input Documents/I-096.docx [retrieved on 2015-10-22]
- HUAWEI: "Progress overview on network slicing in SA1, SA2, NGMN and analysis of potential management related aspects", 3GPP DRAFT; S5-165136 PCR TR 28.801 PROGRESS OVERVIEW ON NETWORK SLICING IN SA1, SA2, NGMN AND ANALYSIS OF POTENTIAL MANAGEMENT RELATED ASPECTS, 3RD GENERATION PARTNERSHIP PROJECT (3GPP), MOBILE COMPE , vol. SA WG5, no. San Francisco; 20160829 - 20160902 19 August 2016 (2016-08-19), XP051144642, Retrieved from the Internet: URL:http://www.3gpp.org/ftp/tsg_sa/WG5_TM/ TSGS5_109/Docs/ [retrieved on 2016-08-19]
- ZTE CORPORATION: "IFA022 Multi-Site Network Slicing Use case", ETSI DRAFT; NFVIFA(16)000767R6, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - NFV IFA - Interfaces and Architecture 9 August 2016 (2016-08-09), pages 1-14, XP014277506, Retrieved from the Internet: URL:docbox.etsi.org\ISG\NFV\IFA\05-CONTRIB UTIONS\2016\NFVIFA(16)?000767r6_IFA022_Mul ti-Site_Network_Slicing_Use_case__.docx [retrieved on 2016-08-09]
- HYUNGSOO KIM KT KOREA (REP OF): "Baseline Document: Network Management Framework for IMT-2020;IMT-I-199", ITU-T DRAFT; STUDY PERIOD 2013-2016; FOCUS GROUP IMT-2020; SERIES IMT-I-199, INTERNATIONAL TELECOMMUNICATION UNION, GENEVA ; CH , vol. imt-2020 27 October 2016 (2016-10-27), pages 1-35, XP044242546, Retrieved from the Internet: URL:https://extranet.itu.int/ITU-T/focusgr oups/imt-2020/Workspace/O-XXX.docx [retrieved on 2016-10-27]
- TAESANG CHOI ETRI REPUBLIC OF KOREA: "Proposed editorial changes of the IMT-2020 network management framework output document;C.135 Rev.1", ITU-T DRAFT; STUDY PERIOD 2017-2020; STUDY GROUP 13; SERIES C.135 REV.1, INTERNATIONAL TELECOMMUNICATION UNION, GENEVA ; CH , vol. 21/13 24 January 2017 (2017-01-24), pages 1-40, XP044208223, Retrieved from the Internet: URL:https://www.itu.int/ifa/t/2017/sg13/do cs/c/ties/T17-SG13-C-0135!R1!MSW-E.docx [retrieved on 2017-01-24]
- ZTE: "Security Layer: Identity and Slice Management", 3GPP TSG SA WG3 (Security) Ad-hoc Meeting on FS_NSA S 3-161309, 29 September 2016 (2016-09-29), XP051170292,
- HUAWEI: "Progress overview on network slicing in SA1, SA2, NGMN and ana- lysis of potential management related aspects", 3GPP TSG SA WG5 (Telecom Management) Meeting #109 S 5-165136, 2 September 2016 (2016-09-02), XP051144642,

## Description

### Technical Field

The present disclosure relates to the field of communications, and more particularly to an orchestration and management system and a network slice processing method.

### Background

Future 5G networks will introduce more scenario applications, involving daily related Virtual Reality (VR), Augmented Reality (AR), autonomous driving, intelligent transportation, logistics and warehousing, industrial automation, etc. As an information infrastructure, 5G will provide network connectivity features that meet the needs of different fields, and promote the ability improvement and transformation of various industries. However, many scenario use cases have different network Quality of Service (QoS) requirements. For example, the connection density of unmanned driving is high, and the network is required to have wide-area coverage and low latency characteristics. The remote interaction of VR requires data connection with the characteristics of low latency and high throughput. The mission-critical Internet of Things has low requirements for latency and throughput, but it is necessary to ensure network reliability. Therefore, connectivity services carried in the fifth generation mobile communication technology (5G) network involve various QoS requirements such as geographic coverage area, duration, capacity, speed, latency, robustness, and security. These QoS requirements may be quite different and even contradictory. In a shared physical network, uniform modulation methods cannot be used to coordinate such different use case requirements, and it is even more impossible to customize a scenario.

Therefore, in a 5G system, a physical network must be abstracted into multiple virtual networks to cope with different scenario use cases, that is, end-to-end network slices carrying differentiated scenario use cases is realized. The end-to-end network slices not only provide an in-depth network resource processing means, but also can match the complexity required for various services with a customized network connection scheme.

Slicing is the abstraction and reconstruction of a traditional physical network. It is necessary to replace a traditional Operation Support System (OSS) and a Business Support System (BSS) with a new Network Function Virtualization Management and Orchestration (NFV MANO) system to orchestrate and manage network resources and connections.

A traditional telecommunication network is built on the physical network. Network functions and physical resources are bound and solidified. Specific physical resources carry specific network functions. Therefore, it is not possible to customize various differentiated scenario use cases to meet different QoS requirements.

ITU-T DRAFT: "Draft deliverable of Network softwarization for IMT-2020 networks; IMT-I-096r"; HUAWEI: "Progress overview on network slicing in SA1, SA2, NGMN and analysis of potential management related aspects" 3GPP DRAF; ZTE CORPORATION: "IFA022 Multi-Site Network Slicing Use case", ETSI DRAFT provide respective technical solutions; however, the above mentioned problem still remains unsolved.

In view of the above technical problem in the related art, an effective solution has not been proposed yet.

### Summary

The embodiments of the present disclosure provide an orchestration and management system, a network slice processing method and a storage medium comprising a stored computer program which when executed performs the network slice processing method, which at least solve the problem in the related art that various QoS requirements cannot be satisfied for differentiated scene use cases.

The present invention is defined by the appended independent claims, dependent claims constitute embodiments of the invention. Any other embodiment of the description not covered by the appended claims is to be considered as not being part of the present invention,

According to an embodiment of the present disclosure, an orchestration and management system is provided according to independent Claim 1.

In at least one exemplary embodiment, the inter-slice MANO module may be further configured to construct a network slice blueprint according to the service starting request, allocate and activate a computing storage resource in a Data Center (DC) according to the network slice blueprint, open a Wide Area Network (WAN) between physical DCs, and create a Virtual Data Center (VDC), wherein the network slice blueprint comprises: requirements on the computing storage resource in the DC, a network connection topology in the DC, and an end-to-end network connection service in the DC. The network-slice MANO module may be further configured to construct a network service blueprint according to the network service, and divide the network slice into isolated subnet slices according to division of a network functional domain.

In at least one exemplary embodiment, the inter-slice MANO module may include: a first inter-network slice Network Function Virtualization Orchestrator (NFVO) module and a first slice Life Cycle Management (LCM) module. The first inter-network slice NFVO module may be configured to receive the service starting request. The first slice LCM module may be configured to activate loading of the network-slice MANO module and instruct the network-slice MANO module to create the network service. The network-slice MANO module may include: a first network slice NFVO module and a first General-Virtualized Network Function Management (G-VNFM) module. The first network slice NFVO module may be configured to create the network service. The first G-VNFM module may be configured to activate loading of the subnet-slice MANO module, and issue VNF requirements into the subnet slice. The subnet-slice MANO module may include: a first subnet-slice NFVO module and a first Specific-VNFM (S-VNFM) module. The subnet-slice NFVO module may be configured to instruct the first S-VNFM module to activate loading of the VNF. The first S-VNFM module may be configured to activate loading of the VNF.

In at least one exemplary embodiment, the inter-slice MANO module may further include: a first network slice catalog module, a first Software Defined Network (SDN) orchestrator and a first WAN SDN controller. The inter-network slice NFVO module may be further configured to match, in the first network slice catalog module according to the service starting request, a slice template corresponding to the service starting request, and construct a network slice blueprint. The first slice LCM module may be further configured to activate the network slice, instruct the first SDN orchestrator to open a WAN between physical DCs, allocate and activate a computing storage resource in the DC and create a VDC according to the network slice blueprint. The first SDN orchestrator may be configured to open the WAN between the physical DCs and instruct the WAN SDN controller to create a connection to the WAN.

In at least one exemplary embodiment, the network-slice MANO module may further include: a first DC SDN controller and a first Virtualized Infrastructure Manager (VIM) Agent. The network-slice NFVO module may be further configured to construct a network service blueprint according to the network service, divide the network slice into isolated subnet slices according to division of a network functional domain, and instruct the first G-VNFM module to activate the network service. The first G-VNFM module may be further configured to activate the network service, instruct the first DC SDN controller to open a connection in the DC, and instruct the first VIM Agent to isolate VDC resources according to a specified subnet slice. The first DC SDN controller may be configured to open the connection in the DC. The first VIM Agent may be configured to isolate the VDC resources according to the specified subnet slice.

In at least one exemplary embodiment, the subnet-slice MANO module may further include: a first access SDN controller, a first subnet-slice VIM Agent and a first Element Management System (EMS). The first subnet-slice NFVO module may be further configured to construct a VNF blueprint. The first S-VNFM module may be further configured to instruct the first access SDN controller to open a connection between a remote node and an Edge Cloud, instruct the first subnet-slice VIM Agent to allocate and adjust VDC resources in the subnet slice, and notify the first EMS of complete loading of the VNF. The first access SDN controller may be configured to open the connection between the remote node and the Edge Cloud. The first subnet-slice VIM Agent may be configured to allocate and adjust the VDC resources in the subnet slice. The first EMS may be configured to perform network function management on a loading completed VNF.

In at least one exemplary embodiment, the inter-slice MANO module may be further configured to receive a service changing request of a user, and instruct the network-slice MANO module to adjust a capacity of the network slice. The network-slice MANO module may be further configured to change the capacity of the network slice, and instruct the subnet-slice MANO module to adjust the capacity of the subnet slice. The subnet-slice MANO module may be further configured to adjust the capacity of the subnet slice, and deactivate or activate loading of the VNF.

In at least one exemplary embodiment, the inter-slice MANO module may be further configured to expand or shrink the capacity of the network slice according to the service changing request, change a network slice blueprint corresponding to the network slice, and adjust and allocate computing storage resources in the DC according to the changed network slice blueprint.

In at least one exemplary embodiment, the inter-slice MANO module may further include:
a second inter-network slice NFVO module and a second slice LCM module. The second inter-network slice NFVO module may be configured to receive the service changing request. The second slice LCM module may be configured to instruct the network-slice MANO module to adjust a capacity of the network slice. The network-slice MANO module may further include: a second network-slice NFVO module and a second G-VNFM module. The second network-slice NFVO module may be configured to change the capacity of the network slice. The second G-VNFM module may be configured to instruct the subnet-slice MANO module to adjust the capacity of the network slice. The subnet-slice MANO module may further include: a second subnet-slice NFVO module and a second S-VNFM module. The second subnet-slice NFVO module may be configured to adjust the capacity of the network slice and instruct the second S-VNFM module to deactivate or activate loading of the VNF. The second S-VNFM module may be configured to deactivate or activate loading of the VNF.

In at least one exemplary embodiment, the inter-slice MANO module may further include: a second network slice catalog module. The second inter-network slice NFVO module may be further configured to change a network slice blueprint corresponding to the network slice in the second network slice catalog module according to the service changing request. The second slice LCM module may be configured to adjust computing storage resources in the DC according to the changed network slice blueprint.

In at least one exemplary embodiment, the network-slice MANO module may further include: a DC SDN controller, a second VIM Agent, and a Network Service blueprint (NS) catalog module. The second network-slice NFVO module may be further configured to change a network service blueprint in the NS catalog module, and instruct the second G-VNFM module to adjust the network service. The second G-VNFM module may be further configured to instruct the DC SDN controller to adjust a connection in the DC, and instruct the second VIM Agent to adjust VDC resources for the subnet slice. The DC SDN controller may be configured to adjust the connection in the DC. The second VIM Agent may be configured to adjust the VDC resources for the subnet slice.

In at least one exemplary embodiment, the subnet-slice MANO module may further include: a second access SDN controller, a second subnet-slice VIM Agent and a second EMS. The second subnet-slice NFVO module may be configured to construct a VNF blueprint. The second S-VNFM module may be further configured to instruct the second access SDN controller to open a connection between a remote node and an Edge Cloud, instruct the second subnet-slice VIM Agent to re-allocate and re-adjust VDC resources in the subnet slice, and notify the second EMS of complete loading of the VNF or complete deactivation of the VNF. The second access SDN controller may be configured to open the connection between the remote node and the Edge Cloud. The second subnet-slice VIM Agent may be configured to re-allocate and re-adjus the VDC resources in the subnet slice. The second EMS may be configured to perform network function management on the loading completed VNF.

In at least one exemplary embodiment, the inter-slice MANO module may be further configured to receive a service terminating request of a user, and instruct the network-slice MANO module to delete the network slice. The network-slice MANO module may be further configured to instruct the subnet-slice MANO module to delete the subnet slice. The subnet-slice MANO module may be further configured to deactivate and delete all the VNFs.

In at least one exemplary embodiment, the inter-slice MANO module may be further configured to delete a VDC, recycle computing storage resources, release a connection of a WAN, and delete a network slice blueprint.

In at least one exemplary embodiment, the inter-slice MANO module may further include: a third inter-network slice NFVO module and a third slice LCM module. The third inter-network slice NFVO module may be configured to receive a service terminating request. The third slice LCM module may be configured to delete an end-to-end network service.

In at least one exemplary embodiment, the inter-slice MANO module may further include: a third network slice catalog module, a second SDN orchestrator and a second WAN SDN controller. The second SDN orchestrator may be configured to instruct the second WAN SDN controller to delete a connection of the WAN and release the connection of the WAN. The third slice LCM module may be further configured to delete the VDC and recycle computing storage resources. The third inter-network slice NFVO module may be further configured to instruct the third network slice catalog module to delete the network slice blueprint.

According to an embodiment of the present disclosure, a network slice processing method is provided according to independent Claim 17.

According to still another embodiment of the present disclosure, a storage medium is also according to independent Claim 18.

Through the embodiments in the present disclosure, an inter-slice MANO module, a network-slice MANO module and a subnet-slice MANO module are provided, and the inter-slice MANO module, the network-slice MANO module and the subnet-slice MANO module are different levels of MANO modules, wherein the inter-slice MANO module is located at the top layer, and then the network-slice MANO module and the subnet-slice MANO module are arranged in sequence, which respectively manage different life cycles, so that the modules above may cooperate with each other from top to bottom in a layer-by-layer recursive manner to complete the entire network connection. The present disclosure can adapt to differentiated scenarios and satisfy QoS requirements, and thus solves the problem in the related art that various QoS requirements cannot be satisfied for differentiated scene use cases.

### Brief Description of the Drawings

The accompanying drawings described herein are used to provide a deeper understanding of the present disclosure, and constitute a part of the present application, and the exemplary embodiments of the present disclosure and the description thereof are used to explain the present disclosure, but do not constitute improper limitations to the present disclosure. In the drawings:
Fig. 1 is a structure block diagram of an orchestration and management system according to an embodiment of the present disclosure;
Fig. 2 is a hardware structure block diagram of a server in a DC of a network slice processing method according to an embodiment of the present disclosure;
Fig. 3 is a schematic flowchart of a network slice processing method according to an embodiment of the present disclosure;
Fig. 4 is a schematic architectural diagram of an orchestration management system of a slice-based virtual telecommunication network according to an exemplary embodiment of the present disclosure;
Fig. 5 is a schematic flowchart of constructing and activating a network slice according to an exemplary embodiment of the present disclosure;
Fig. 6 is a schematic flowchart of expanding and shrinking the capacity of a network slice according to an exemplary embodiment of the present disclosure;
Fig. 7 is a schematic flowchart of deleting a network slice according to an exemplary embodiment of the present disclosure;
Fig. 8 is a detailed implementation architecture diagram of a system according to an exemplary embodiment of the present disclosure;
Fig. 9 is a detailed flowchart of a process of constructing and activating a network slice according to an exemplary embodiment of the present disclosure;
Fig. 10 is a detailed flowchart of expanding and shrinking the capacity of a network slice according to an exemplary embodiment of the present disclosure; and
Fig. 11 is a detailed flowchart of deleting a network slice according to an exemplary embodiment of the present disclosure.

### Detailed Description of the Embodiments

The present disclosure is described below with reference to the drawings and in conjunction with the embodiments in detail. It is to be noted that in the case of no conflict, the features in the embodiments and the embodiments in the present application may be combined with each other.

It is to be noted that the specification and claims of the disclosure and the terms "first", "second" and the like in the drawings are used to distinguish similar objects, and do not need to describe a specific sequence or a precedence order.

### Embodiment 1

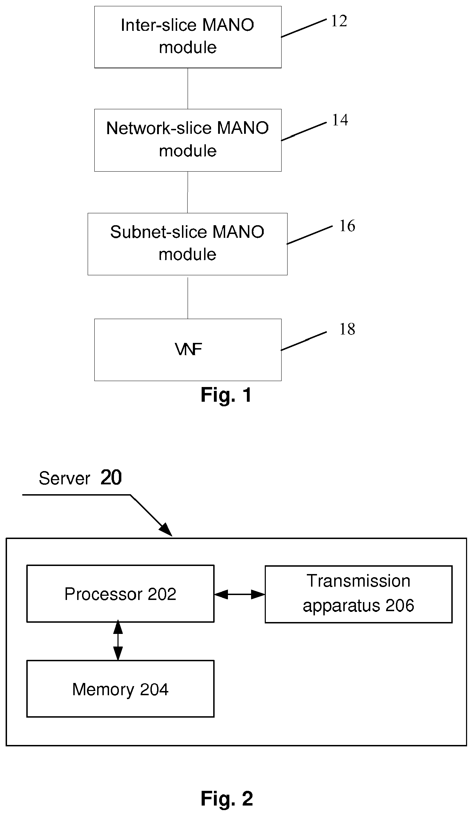

The embodiment of the present disclosure provides an orchestration and management system. Fig. 1 is a structure block diagram of an orchestration and management system according to an embodiment of the present disclosure. As shown in Fig. 1, the orchestration and management system includes: an inter-slice MANO module 12, a network-slice MANO module 14, a subnet-slice MANO module 16, and a VNF 18; wherein,

The inter-slice MANO module 12 is configured to manage a life cycle of a network slice.

The network-slice MANO module 14 is located in the network slice and configured to manage a life cycle of a network service.

The subnet-slice MANO module 16 is located in a subnet slice of the network slice and configured to manage a life cycle of the VNF 18, wherein the subnet slice is one or more subnet segments obtained by dividing the network slice according to a preset rule.

Through the above system, the inter-slice MANO module 12, the network-slice MANO module 14 and the subnet-slice MANO module 16 are provided, and the inter-slice MANO module 12, the network-slice MANO module 14 and the subnet-slice MANO module 16 are different levels of MANO modules, wherein the inter-slice MANO module 12 is located at the top layer, and then the network-slice MANO module 14 and the subnet-slice MANO module 16 are arranged in sequence, which respectively manage different life cycles, so that the modules above may cooperate with each other from top to bottom in a layer-by-layer recursive manner to complete the entire network connection. The present disclosure can adapt to differentiated scenarios and satisfy QoS requirements, and thus solves the problem in the related art that various QoS requirements cannot be satisfied for differentiated scene use cases.

It is to be noted that the above life cycle may be the whole process from construction activation to deletion. For example, the life cycle of the network slice focuses on the whole process from constructing and activating the network slice to deleting the network slice.

It is to be noted that the network-slice MANO module 14 is located in the network slice, and the network-slice MANO module 14 may be considered to be operating in the network slice, that is, the network slice may provide an operating environment for the network-slice MANO module, but the present disclosure is not limited thereto. Similarly, the subnet-slice MANO module 16 is located in a subnet slice of the network slice. The subnet slice may be considered to provide an operating environment for the subnet-slice MANO module, but the present disclosure is not limited thereto.

It is to be noted that one or more subnet segments obtained by dividing the network slice may be isolated from each other. A means of in-depth customization processing is further provided for differentiated scenario use cases.

It is to be noted that the foregoing preset rules may be multiple, for example, may be divided according to a network functional domain, or may be isolated across manufacturers, that is, may be divided according to the manufacturers, but the present disclosure is not limited thereto.

The above system may complete construction and activation of the network slice. Therefore, in an embodiment of the present disclosure, the inter-slice MANO module 12 may be further configured to receive a service starting request of a user, activate loading of the network-slice MANO module 14 according to the service starting request, and instruct the network-slice MANO module 14 to create the network service, wherein the service starting request including QoS requirements. The network-slice MANO module 14 is further configured to create the network service, activate loading of the subnet-slice MANO module 16, and issue VNF requirements into the subnet slice. The subnet-slice MANO module 16 is further configured to activate loading of the VNF 18.

It is to be noted that the inter-slice MANO module 12 may be further configured to construct a network slice blueprint according to the service starting request, allocate and activate a computing storage resource in a DC, open a WAN between physical DCs, and create a VDC, according to the network slice blueprint, wherein the network slice blueprint includes: requirements on the computing storage resource in the DC, a network connection topology in the DC, and an end-to-end network connection service in the DC. The network-slice MANO module 14 is further configured to construct a network service blueprint according to the network service, and divide the network slice into isolated subnet slices according to division of a network functional domain.

It is to be noted that the above preset rule may be a division manner of the network functional domain, for example, the network functional domain may be divided according to a Virtual Core Network (VCN) and a Virtual Access Network (VRAN).

It is to be noted that the inter-slice MANO module 12 may include: a first inter-network slice NFVO module and a first slice LCM module, wherein the first inter-network slice NFVO module is configured to receive the service starting request. The first slice LCM module is configured to activate loading of the network-slice MANO module and instruct the network-slice MANO module to create the network service. The network-slice MANO module 14 may include: a first network slice NFVO module and a first G-VNFM module, wherein the first network slice NFVO module is configured to create the network service. The first G-VNFM module is configured to activate loading of the subnet-slice MANO module, and issue VNF requirements into the subnet slice. The subnet-slice MANO module 16 may include: a first subnet-slice NFVO module and a first S-VNFM module, wherein the subnet-slice NFVO module is configured to instruct the first S-VNFM module to activate loading of the VNF. The first S-VNFM module is configured to activate loading of the VNF 18.

It is to be noted that the inter-slice MANO module 12 may further include: a first network slice catalog module, a first SDN orchestrator and a first WAN SDN controller, wherein the inter-network slice NFVO module is further configured to match, in the first network slice catalog module according to the service starting request, a slice template corresponding to the service starting request, and construct a network slice blueprint. The first slice LCM module is further configured to activate the network slice, instruct the first SDN orchestrator to open a WAN between physical DCs, allocate and activate a computing storage resource in the DC and create a VDC according to the network slice blueprint. The first SDN orchestrator is configured to open the WAN between the physical DCs and instruct the WAN SDN controller to create a connection to the WAN.

It is to be noted that the network-slice MANO module 14 may further include: a first DC SDN controller and a first VIM Agent. The network-slice NFVO module is further configured to construct a network service blueprint according to the network service, divide the network slice into isolated subnet slices according to division of a network functional domain, and instruct the first G-VNFM module to activate the network service. The first G-VNFM module is further configured to activate the network service, instruct the first DC SDN controller to open a connection in the DC, and instruct the first VIM Agent to isolate VDC resources according to a specified subnet slice. The first DC SDN controller is configured to open the connection in the DC. The first VIM Agent is configured to isolate the VDC resources according to the specified subnet slice.

It is to be noted that the subnet-slice MANO module 16 may further include: a first access SDN controller, a first subnet-slice VIM Agent and a first EMS, wherein the first subnet-slice NFVO module is further configured to construct a VNF blueprint. The first S-VNFM module is further configured to instruct the first access SDN controller to open a connection between a remote node and an Edge Cloud, instruct the first subnet-slice VIM Agent to allocate and adjust VDC resources in the subnet slice, and notify the first EMS of complete loading of the VNF. The first access SDN controller is configured to open the connection between the remote node and the Edge Cloud. The first subnet-slice VIM Agent is configured to allocate and adjust the VDC resources in the subnet slice. The first EMS is configured to perform network function management on a loading completed VNF.

The above system may also complete the capacity expansion and shrinkage of the network slice. Therefore, in an embodiment of the present disclosure, the inter-slice MANO module 12 may be further configured to receive a service changing request of a user, and instruct the network-slice MANO module 14 to adjust a capacity of the network slice. The network-slice MANO module 14 is further configured to change the capacity of the network slice, and instruct the subnet-slice MANO module 16 to adjust the capacity of the subnet slice. The subnet-slice MANO module 16 is further configured to adjust the capacity of the subnet slice, and deactivate or activate loading of the VNF 18.

It is to be noted that capacity changing the capacity of the network slice may be, but is not limited thereto, one of the following: expanding the capacity of the network slice and reducing the capacity of the network slice. It is to be noted that the meaning of the above adjustment may be similar to the meaning of the change.

It is to be noted that in the case of expanding the capacity, the above VNF 18 may be considered as a newly expanded VNF.

It is to be noted that the inter-slice MANO module 12 may be further configured to expand or shrink the capacity of the network slice according to the service changing request, change a network slice blueprint corresponding to the network slice, and adjust and allocate computing storage resources in the DC according to the changed network slice blueprint.

It is to be noted that the inter-slice MANO module 12 may include: a second inter-network slice NFVO module and a second slice LCM module, wherein the second inter-network slice NFVO module may be configured to receive a service changing request. The second slice LCM module is configured to instruct the network-slice MANO module to adjust a capacity of the network slice. The network-slice MANO module 14 may include: a second network-slice NFVO module and a second G-VNFM module, wherein the second network-slice NFVO module is configured to change the capacity of the network slice. The second G-VNFM module is configured to instruct the subnet-slice MANO module 16 to adjust the capacity of the subnet slice. The subnet-slice MANO module 16 may include: a second subnet-slice NFVO module and a second S-VNFM module, wherein the second subnet-slice NFVO module is configured to adjust the capacity of the subnet slice and instruct the second S-VNFM module to deactivate or activate loading of the VNF. The second S-VNFM module is configured to deactivate or activate loading of the VNF 18.

It is to be noted that the inter-slice MANO module may further include: a second network slice catalog module, wherein the second inter-network slice NFVO module is further configured to change a network slice blueprint corresponding to the network slice in the second network slice catalog module according to the service changing request. The second slice LCM module is configured to adjust computing storage resources in the DC according to the changed network slice blueprint.

It is to be noted that the network-slice MANO module 14 may further include: a DC SDN controller, a second VIM Agent, and an NS catalog module, wherein the second network-slice NFVO module is further configured to change a network service blueprint in the NS catalog module, and instruct the second G-VNFM module to adjust the network service. The second G-VNFM module is further configured to instruct the DC SDN controller to adjust a connection in the DC, and instruct the second VIM Agent to adjust VDC resources for the subnet slice. The DC SDN controller is configured to adjust the connection in the DC. The second VIM Agent is configured to adjust the VDC resources for the subnet slice.

It is to be noted that the subnet-slice MANO module 16 may further include: a second access SDN controller, a second subnet-slice VIM Agent and a second EMS, wherein the second subnet-slice NFVO module is configured to construct a VNF blueprint. The second S-VNFM module is further configured to instruct the second access SDN controller to open a connection between a remote node and an Edge Cloud, instruct the second subnet-slice VIM Agent to re-allocate and re- adjust VDC resources in the subnet slice, and notify the second EMS of complete loading of the VNF or complete deactivation of the VNF. The second access SDN controller is configured to open the connection between the remote node and the Edge Cloud. The second subnet-slice VIM Agent is configured to re-allocate and re- adjust the VDC resources in the subnet slice. The second EMS is configured to perform network function management on the loading completed VNF.

The above system may also delete the network slice. Therefore, in an embodiment of the present disclosure, the inter-slice MANO module 12 may be further configured to receive a service terminating request of a user, and instruct the network-slice MANO module 14 to delete the network slice. The network-slice MANO module 14 may be further configured to instruct the subnet-slice MANO module 16 to delete the subnet slice. The subnet-slice MANO module 16 may be further configured to deactivate and delete all the VNFs 18.

It is to be noted that the inter-slice MANO module 12 may be further configured to delete a VDC, recycle computing storage resources, release a connection of a WAN, and delete a network slice blueprint.

It is to be noted that the inter-slice MANO module 12 may include: a third inter-network slice NFVO module and a third slice LCM module, wherein the third inter-network slice NFVO module is configured to receive a service changing request. The third slice LCM module is configured to delete an end-to-end network service.

It is to be noted that the inter-slice MANO module 12 may further include: a third network slice catalog module, a second SDN orchestrator and a second WAN SDN controller, wherein the second SDN orchestrator is configured to instruct the second WAN SDN controller to delete a connection of the WAN and release the connection of the WAN. The third slice LCM module is further configured to delete the VDC and recycle computing storage resources. The third inter-network slice NFVO module is further configured to instruct the third network slice catalog module to delete the network slice blueprint.

It is to be noted that the first inter-network slice NFVO module, the second inter-network slice NFVO module and the third inter-network slice NFVO module may be the same module, the first slice LCM module, the second slice LCM module and the third slice LCM module may be the same module, the first network slice catalog module, the second network slice catalog module and the third network slice catalog module may be the same module, the second SDN orchestrator and the first SDN orchestrator may be the same module, the second WAN SDN controller and the first WAN SDN controller may be the same module, the second network-slice NFVO module and the first network-slice NFVO module may be the same module, the second G-VNFM module and the first G-VNFM module may be the same module, the second subnet-slice NFVO module and the first subnet-slice NFVO module may be the same module, the second S-VNFM module and the first S-VNFM module may be the same module, the second VIM Agent and the first VIM Agent may be the same module, the second access SDN controller and the first access SDN controller may be the same module, the second subnet-slice VIM Agent and the first subnet-slice VIM Agent may be the same module, and the first EMS and the second EMS may be the same module, but the present disclosure is not limited thereto.

It is to be noted that each of the above modules may be implemented by software or hardware. For the latter, it may be implemented by, but not limited to, the following manners that the above modules are all located in the same processor; or, the above modules are located in different processors in any combination form respectively.

### Embodiment 2

The method provided in Embodiment 2 of the present application may be run in multiple servers in a DC, but is not limited thereto. Running in multiple servers in the DC is taken as an example. Fig. 2 is a hardware structure block diagram of a server in a DC of a network slice processing method according to an embodiment of the present disclosure. As shown in Fig. 2, a server 20 may include one or more (only one shown in the figure 2) processors 202 (the processor may include, but is not limited to, a processing apparatus such as a Micro Control Unit (MCU) or a Field Programmable Gate Array (FPGA), a memory 204 configured to store data, and a transmission apparatus 206 configured as a communication function. It will be understood by those skilled in the art that the structure shown in Fig. 2 is merely illustrative and does not limit the structure of the above electronic device. For example, the server 20 may also include more or fewer components than those shown in Fig. 2, or have a different configuration than that shown in Fig. 2.

The memory 204 may be configured to store a software program and module of application software, such as a program instruction/module corresponding to a network slice processing method in the embodiments of the present disclosure. The processor 202 executes various functional applications and data processing, that is, implements the above method by running the software program and module stored in the memory 204. The memory 204 may include a high speed random access memory and may also include a non-volatile memory such as one or more magnetic storage apparatuses, a flash memory, or other non-volatile solid state memories. In some examples, the memory 204 may further include memories remotely located relative to the processor 202, which may be connected to the service over a network. The examples of such networks include, but are not limited to, the Internet, the Intranet, local area networks, mobile communication networks, and combinations thereof.

The transmission apparatus 206 is configured to receive or send data over a network. The above specific network examples may include a wireless network provided by a communication provider of the server 20. In one example, the transmission apparatus 206 includes a Network Interface Controller (NIC) that can be connected to other network devices through the base station to communicate with the Internet. In one example, the transmission apparatus 206 may be a Radio Frequency (RF) module for communicating with the Internet wirelessly.

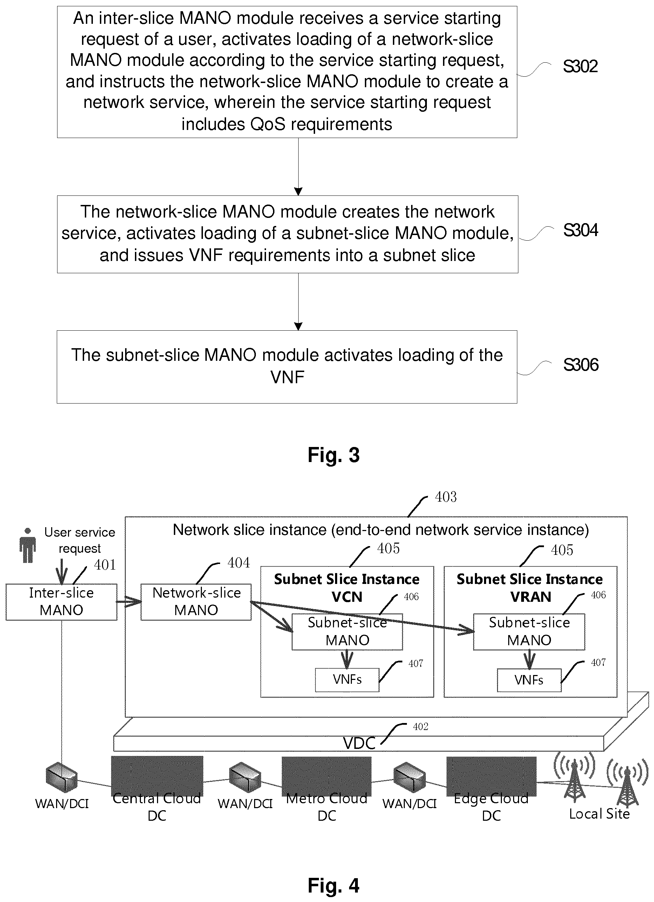

In the present embodiment, a network slice processing method applied to multiple DCs having the server shown in Fig. 2 is provided. Fig. 3 is a schematic flowchart of a network slice processing method according to an embodiment of the present disclosure. As shown in Fig. 3, the method includes the following operations.

In operation S302, an inter-slice MANO module receives a service starting request of a user, activates loading of a network-slice MANO module according to the service starting request, and instructs the network-slice MANO module to create a network service, wherein the service starting request includes QoS requirements.

In operation S304, the network-slice MANO module creates the network service, activates loading of a subnet-slice MANO module, and issues VNF requirements into a subnet slice.

In operation S306, the subnet-slice MANO module activates loading of the VNF.

Through the above operations, it is possible to initiate a service request from the user to the network slice through the inter-slice MANO module, to the subnet slice through the network-slice MANO module, and then to the VNF through the subnet-slice MANO module, thereby obtaining the entire end-to-end network connection, so that construction and activation may be performed from top to bottom in a layer-by-layer recursive manner based on the method. The method can adapt to differentiated scenarios and satisfy QoS requirements, and thus solves the problem in the related art that various QoS requirements cannot be satisfied for differentiated scene use cases.

It is to be noted that the above method is performed by the orchestration and management system described in Embodiment 1.

In an embodiment of the present disclosure, after the inter-slice MANO module receives the service starting request of the user in operation S302, the method may further include: the inter-slice MANO module constructs a network slice blueprint according to the service starting request, allocates and activates a computing storage resource in a DC according to the network slice blueprint, opens a WAN between physical DCs, and creates a VDC, wherein the network slice blueprint includes: requirements on the computing storage resource in the DC, a network connection topology in the DC, and an end-to-end network connection service in the DC.

In an embodiment of the present disclosure, after the network-slice MANO module creates the network service in operation S304, the method may further include: the network-slice MANO module constructs a network service blueprint according to the network service, and divides the network slice into isolated subnet slices according to division of a network functional domain.

In an embodiment of the present disclosure, after operation S306, the method may further include: the inter-slice MANO module receives a service changing request of the user, and instructs the network-slice MANO module to adjust a capacity of the network slice; the network-slice MANO module changes the capacity of the network slice, and instructs the subnet-slice MANO module to adjust the capacity of the subnet slice; and the subnet-slice MANO module adjusts the capacity of the subnet slice, and deactivates or activates loading of the VNF.

It is to be noted that after the inter-slice MANO module receives the service changing request of the user, the method may further include: the inter-slice MANO module expands the capacity of the network slice according to the service changing request, changes a network slice blueprint corresponding to the network slice, and adjusts and allocates computing storage resources in the DC according to the changed network slice blueprint.

In an embodiment of the present disclosure, after operation S306, the method may further include: the inter-slice MANO module receives a service terminating request of the user, and instructs the network-slice MANO module to delete the network slice; the network-slice MANO module instructs the subnet-slice MANO module to delete the subnet slice; and the subnet-slice MANO module deactivates and deletes all the VNFs.

It is to be noted that after the subnet-slice MANO module deactivates and deletes all the VNFs, the method further includes: the inter-slice MANO module deletes a VDC, recycles computing storage resources, releases a connection of a WAN, and deletes a network slice blueprint.

It is to be noted that the above orchestration and management system may be a DC, and each of the above modules, such as each of the inter-slice MANO module, the network-slice MANO module and the subnet-slice MANO module, may be the server as shown in Fig. 2, but the present disclosure is not limited thereto.

Through the description of the above implementation manners, those skilled in the art can clearly understand that the method according to the above embodiment may be implemented by means of software plus a necessary general hardware platform, and of course, may also be implemented through hardware, but in many cases, the former is a better implementation manner. Based on such understanding, the technical solution of the present disclosure, which is essential or contributes to the conventional art, may be embodied in the form of a software product stored in a storage medium (such as a ROM/RAM, a magnetic disk and an optical disc), including a number of instructions for causing a terminal device (which may be a mobile phone, a computer, a server, or a network device, etc.) to perform the methods described in various embodiments of the present disclosure.

### Embodiment 3

The embodiment of the present disclosure also provides a storage medium. In the present embodiment, the storage medium is configured to store a program code for performing the operations of the method in Embodiment 2.

Optionally, in the present embodiment, the storage medium may include, but is not limited to, various media capable of storing a program code such as a U disk, a Read-Only Memory (ROM), a Random Access Memory (RAM), a mobile hard disk, a magnetic disk or an optical disc.

Optionally, in the present embodiment, a processor performs the operations of the method in Embodiment 2 according to the program code already stored in the storage medium.

Optionally, a specific example in the present embodiment may refer to the examples described in the above embodiments and alternative implementation manners, and details are not described herein in the present embodiment.

For a better understanding of the present disclosure, the present disclosure is further explained in conjunction with the exemplary embodiments.

A traditional telecommunication network is built on the physical network. Network functions and physical resources are bound and solidified. Specific physical resources carry specific network functions. Therefore, it is not possible to customize various differentiated scenario use cases to meet different QoS requirements. The purpose of the exemplary embodiments of the present disclosure is to solve the above drawbacks, and to provide a slice-based orchestration and management method and apparatus for a virtual telecommunication network, so that the 5G telecommunication network is constructed on an abstract virtual telecommunication network above the physical network, that is, an end-to-end network slice. The resources in the network slice are exclusive and isolated, provide a means for in-depth customization of various differentiated scenario use cases, and finally satisfy the QoS requirements.

The method is specifically as follows: after a user initiates a service request, the service request needs to be decomposed into a request for network resources and a corresponding QoS requirement, and an end-to-end network slice blueprint matching the service requirement is designed according to a slice template; then, DC resources required for the slice are allocated and activated based on the slice blueprint, a WAN across a DC is opened, and a VDC carrying the slice operation is constructed; after the VDC is activated, isolated subnet slices are segmented according to the division of a network functional domain; and finally, VNF is activated and loaded in the subnet slices, and the service request of the user can obtain a complete end-to-end network connection from a VCN to a VRAN. An exemplary embodiment of the present disclosure provides an orchestration and management method and apparatus, which create an end-to-end network slice and complete a whole network slice LCM process, including blueprint-based slice construction and activation, operation state monitoring, update, migration, share, capability expansion, capability shrinkage, slice deletion, etc.

Fig. 4 is a schematic architectural diagram of an orchestration management system of a slice-based virtual telecommunication network according to an exemplary embodiment of the present disclosure. As shown in Fig. 4, the schematic architecture includes the following high-order sub-systems:
Inter-slice MANO 401 (equivalent to the inter-slice MANO module in the above embodiment), where the inter-slice MANO sub-system is a system-wide top-level MANO that is responsible for slice LCM, i.e., blueprint-based slice construction and activation, operation state monitoring, update, migration, share, capability expansion, capability shrinkage, slice deletion, etc, and the sub-system consists of modules such as inter-network slice NFVO, slice LCM, slice blueprint catalog, SDN orchestrator, WAN SDN controller, and VIM;
VDC 402, where the VDC is a bearer of an end-to-end network slice and is created and managed by the inter-slice MANO, and the VDC shields details such as underlying physical resources across manufacturers and regions, and provides a consistent DC management interface for upper-layer application access scheduling;
network slice instance/end-to-end network service instance 403, where the network slice instance is an operation environment and container of the end-to-end network service instance, and the end-to-end network service instance is an entity that carries user services;
network-slice MANO 404 (equivalent to the network-slice MANO module in the above embodiment), where the network-slice MANO sub-system is a top-level MANO in an end-to-end network slice, which is responsible for the LCM of network services, that is, the responsibility of constructing and activating, capability expanding, capability shrinking, and deleting network services based on blueprints, and the sub-system consists of modules such as network-slice NFVO, G-VNFM, NS catalog, SDN controller in DC, VIM Agent, etc.;
subnet slice instance 405, where isolated network sub-slices are generally divided according to network functional domains, such as a VCN and a VRAN, and the subnet slice is an operation environment and container of a VNF;
subnet-slice MANO 406 (equivalent to the subnet-slice MANO module in the above embodiment), where the subnet-slice MANO sub-system is an MANO in a sub-network, which is responsible for the LCM of a sub-network VNF, that is, the construction, activation, deletion and the like of the VNF based on blueprints, and the sub-system consists of modules such as subnet-slice NFVO, S-VNFM, VNF blueprint catalog, SDN controller on the access side, VIM Agent, etc.; and
VNF 407, where the VNF is an entity that operates in the VDC and assumes responsibility for specific network functions, and each VNF exposes a specific service, and multiple VNFs aggregate to form a service chain, which constitutes an end-to-end network service.

The above concepts of virtualized sub-systems, such as MANO and VNF, have been deeply elaborated in the booming virtualization standards in recent years, such as relevant agreement standards established by the European Telecommunications Standards Institute (ETSI). However, in order that these sub-systems are instantiated and applied to form a complete end-to-end network service in the scenario of constructing a virtual telecommunication network, it is necessary to carry out innovative invention design in combination with the networking requirements of the telecommunication network itself. Related to this patent is to instantiate the above sub-systems and internal modules, construct and activate from top to bottom in a layer-by-layer recursive manner, coordinate with each other, and integrate. A user initiates a service request to a network slice, a subnet slice, and finally to a VNF, until going through the entire end-to-end network connection, so that a slice-based orchestration and management process for a virtual telecommunication network is constructed.

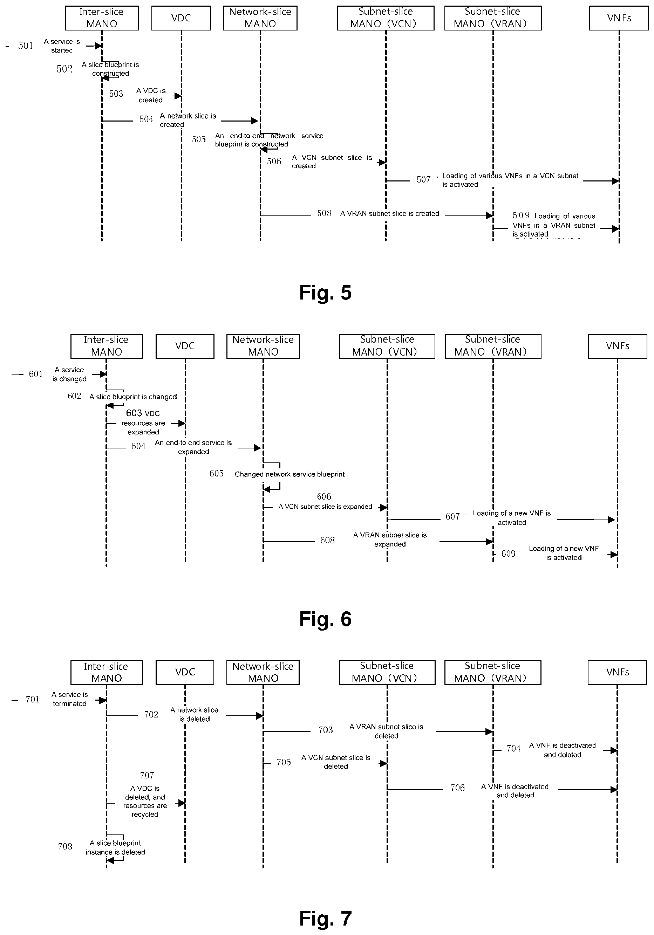

Based on the schematic architecture design diagram shown in Fig. 4, the three exemplary embodiments of Fig. 5, Fig. 6 and Fig. 7 respectively illustrate the schematic flow of use cases for network slice construction, capacity expansion and capacity shrinkage, and deletion.

### Exemplary embodiment 1: Schematic flow of constructing and activating a network slice

Fig. 5 is a schematic flowchart of constructing and activating a network slice according to an exemplary embodiment of the present disclosure. As shown in Fig. 5, the flow includes the following operations.

In operation 501, a sub-system inter-slice MANO receives a service starting request of a user, the request includes QoS requirements such as geographic coverage area, duration, capacity, speed, latency, robustness, and security.

In operation 502, the sub-system inter-slice MANO constructs a network slice blueprint according to the service request content and the QoS requirement, wherein the network slice blueprint includes three parts: a computing storage resource requirement in a DC, a network connection requirement, and an end-to-end network connection service.

In operation 503, the sub-system inter-slice MANO allocates and activates the computing storage resources in the DC according to the network slice blueprint, and opens a connection of a WAN between physical DCs to create a VDC.

In operation 504, the sub-system inter-slice MANO activates loading of a sub-system network-slice MANO in a network slice and instructs to create an end-to-end network service.

In operation 505, the sub-system network-slice MANO constructs a network service blueprint according to the end-to-end network service requirement. At the same time, network-slice MANO needs to divide the end-to-end network into isolated subnet segments according to the division of network functional domains, such as a VCN and a VRAN, and defines virtual network functional requirements in each subnet.

In operation 506, the sub-system network-slice MANO activates loading of a sub-system subnet-slice MANO in a VCN subnet slice and issues VNF requirements in the subnet.

In operation 507, the sub-system VCN subnet-slice MANO activates loading of each VNF instance.

In operation 508, the sub-system network-slice MANO activates loading of a sub-system subnet-slice MANO in a VRAN subnet slice and issues VNF requirements in the subnet.

In operation 509, the sub-system VRAN subnet-slice MANO activates loading of each VNF instance.

### Exemplary embodiment 2: Schematic flow of expanding and shrinking a network slice

Fig. 6 is a schematic flowchart of expanding and shrinking the capacity of a network slice according to an exemplary embodiment of the present disclosure. As shown in Fig. 6, the method includes the following operations.

In operation 601, a sub-system inter-slice MANO receives a service changing request of a user, for example, needing to expand a geographic coverage area of a service.

In operation 602, the sub-system inter-slice MANO decides to expand the capacity of a network slice according to a new geographic coverage area, and changes a corresponding network slice blueprint.

In operation 603, the sub-system inter-slice MANO allocates and adjusts computing storage resources in a DC according to the incremental change of the network slice blueprint.

In operation 604, the sub-system inter-slice MANO instructs a sub-system network-slice MANO to expand the capacity of a network slice.

In operation 605, the sub-system network-slice MANO changes a corresponding network service blueprint.

In operation 606, the sub-system network-slice MANO instructs a sub-system VCN subnet-slice MANO to expand the capacity of a VCN subnet slice.

In operation 607, the sub-system VCN subnet-slice MANO activates loading of a newly expanded VNF instance.

In operation 608, the sub-system network-slice MANO instructs a sub-system VRAN subnet-slice MANO to expand a VRAN subnet slice.

In operation 609, the sub-system VRAN subnet-slice MANO activates loading of a newly expanded VNF instance.

### Exemplary embodiment 3: Schematic flow of deleting a network slice

Fig. 7 is a schematic flowchart of deleting a network slice according to an exemplary embodiment of the present disclosure. As shown in Fig. 7, the method includes the following operations.

In operation 701, a sub-system inter-slice MANO receives a service terminating request of a user.

In operation 702, the sub-system inter-slice MANO instructs a sub-system network-slice MANO to delete a network slice.

In operation 703, the sub-system network-slice MANO instructs a sub-system VRAN subnet-slice MANO to delete a VRAN subnet slice.

In operation 704, the sub-system VRAN subnet-slice MANO deactivates and deletes all VNF instances.

In operation 705, the sub-system network-slice MANO instructs a sub-system VCN subnet-slice MANO to delete a VCN subnet slice.

In operation 706, the sub-system VCN subnet-slice MANO deactivates and deletes all VNF instances.

In operation 707, the sub-system inter-slice MANO deletes a VDC, recycles computing and storage resources, and releases a connection of a WAN.

In operation 708, the sub-system inter-slice MANO deletes a slice blueprint instance.

The embodiments shown in Fig. 5, Fig. 6, and Fig. 7 are all described based on the system schematic architecture diagram shown in Fig. 3. The granularity of the system description is only to a subsystem level, and the component modules inside the sub-system and the collaborative interaction between modules have not been extended to illustrate. In order to better illustrate the specific implementation architecture and execution flow involved in the present disclosure, the implementation architecture and execution flow of the exemplary embodiment of the present disclosure will be described in detail below.

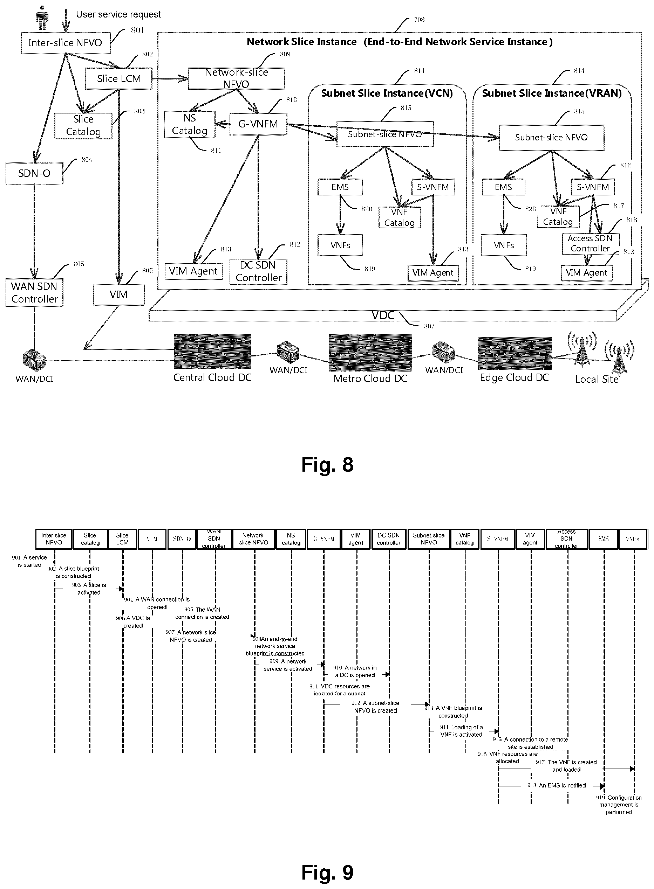

Fig. 8 is a detailed implementation architecture diagram of a system according to an exemplary embodiment of the present disclosure, which is a further in-depth illustration of the schematic architecture diagram shown in Fig. 4, describing the granularity to modules in the sub-system, and the collaboration therebetween. The fourth, fifth, and sixth exemplary embodiments are based on the detailed implementation architecture diagram of Fig. 8, and are also a detailed description of the exemplary embodiments 1, 2, and 3. Referring to Fig. 8, the system includes the following modules:
inter-slice NFVO 801
slice LCM 802
slice catalog 803
SDN Orchestrator (SDN-O) 804
WAN SDN controller 805
VIM 806
VDC 807
network slice instance/end-to-end network service instance 808
network-slice NFVO 809
G-VNFM 810
NS catalog 811
DC SDN controller 812
VIM Agent 813
subnet-slice instance 814
subnet-slice NFVO 815
S-VNFM 816
VNF catalog 817
access SDN controller 818
VNF 819
EMS 820

### Exemplary embodiment 4: Detailed flow of constructing and activating a network slice

Fig. 9 is a detailed flowchart of a process of constructing and activating a network slice according to an exemplary embodiment of the present disclosure. As shown in Fig. 9, the flow includes the following operations.

In operation 901, an inter-slice NFVO module receives a service starting request of a user, the request includes QoS requirements such as geographic coverage area, duration, capacity, speed, latency, robustness, and security.

In operation 902, the inter-slice NFVO module selects a matched slice template in a slice catalog module according to the service request content and the QoS requirement, and constructs a network slice blueprint, wherein the network slice blueprint includes three parts: a computing and storage resource requirement in a DC, a network connection requirement in the DC, and an end-to-end network connection service in the DC.

In operation 903, the inter-slice NFVO module instructs a slice LCM module to activate a network slice.

In operation 904, the slice LCM module instructs an SDN-O module to open a WAN across a DC.

In operation 905, the SDN-O module instructs a WAN SDN controller module to create a WAN connection.

In operation 906, the slice LCM module allocates and activates computing and storage resources in the DC according to a network slice blueprint, and creates a VDC.

In operation 907, the slice LCM module activates loading of modules such as network-slice NFVO, G-VNFM, DC SDN controller, and VIM Agent in the network slice, and instructs the network-slice NFVO module to create an end-to-end network service.

In operation 908, the network-slice NFVO module selects a matched network service template in an NS catalog module according to an end-to-end network service requirement, and constructs a network service blueprint. At the same time, the network-slice NFVO module needs to divide the end-to-end network into different subnet slices according to the division of network functional domains, such as a VCN and a VRAN, and defines virtual network functional requirements in each subnet slice.

In operation 909, the network-slice NFVO module instructs the G-VNFM module to activate a network service.

In operation 910, the G-VNFM module instructs the DC SDN controller module to open a connection in the DC.

In operation 911, the G-VNFM module instructs the VIM Agent module to isolate VDC resources according to a specified subnet.

In operation 912, the G-VNFM module activates loading of the subnet-slice NFVO, EMS, S-VNFM, VNF catalog, and VIM Agent modules in each subnet, and issues the VNF requirements in the subnet to the subnet-slice NFVO module.

In operation 913, the subnet-slice NFVO module selects a matched VNF template in the VNF catalog module according to the network element function requirement in the subnet, and constructs a VNF blueprint.

In operation 914, the subnet-slice NFVO module instructs the S-VNFM module to activate loading of a VNF instance.

In operation 915, the S-VNFM module instructs the access SDN controller module to open a connection between a remote site and an Edge Cloud.

In operation 916, the S-VNFM module instructs the VIM Agent module to allocate and adjust VDC resources in the subnet.

In operation 917, the S-VNFM module activates loading of all VNF instances in the subnet.

In operation 918, the S-VNFM module notifies an EMS module that all VNF instances have been loaded.

In operation 919, the EMS module may perform network function management on the VNF that is instantiated.

End.

### Exemplary embodiment 5: Detailed flow of expanding and shrinking the capacity of a network slice

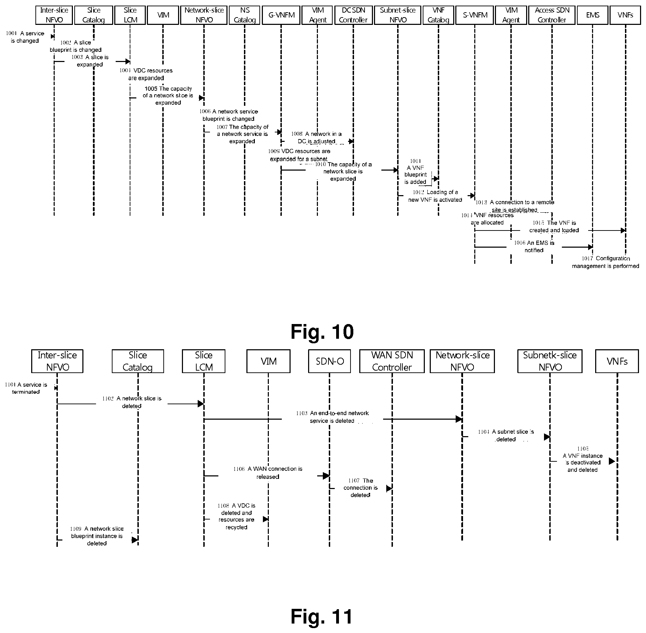

Fig. 10 is a detailed flowchart of expanding and shrinking the capacity of a network slice according to an exemplary embodiment of the present disclosure. As shown in Fig. 10, the method includes the following operations.

In operation 1001, an inter-slice NFVO module receives a service changing request of a user, for example, needing to expand a geographic coverage area of a service.

In operation 1002, the inter-slice NFVO module decides to expand a network slice according to a new geographic coverage area, and changes a corresponding network slice blueprint in a slice catalog module.

In operation 1003, the inter-slice NFVO module instructs a slice LCM module to expand the capacity of a slice.

In operation 1004, the slice LCM module first expands and allocates computing and storage resources in a DC according to the incremental change of the network slice blueprint.

In operation 1005, the slice LCM module instructs a network-slice NFVO module to expand the capacity of the network slice.

In operation 1006, the network-slice NFVO module changes a corresponding network service blueprint in an NS catalog module.

In operation 1007, the network-slice NFVO module instructs the G-VNFM module to expand a network service.

In operation 1008, the G-VNFM module instructs a DC SDN controller module to adjust a connection in the DC.

In operation 1009, the G-VNFM module instructs a VIM Agent module to expand VDC resources for a subnet.

In operation 1010, the G-VNFM module instructs the subnet-slice NFVO module to expand a subnet slice.

In operation 1011, the subnet-slice NFVO module selects a matched VNF template in the VNF catalog module, and constructs a new VNF blueprint.

In operation 1012, the subnet-slice NFVO module instructs the S-VNFM module to activate loading of a new VNF instance.

In operation 1013, for an access subnet, the S-VNFM module needs to instruct the access SDN controller module to open a connection between a remote new site and an Edge Cloud.

In operation 1014, the S-VNFM module instructs the VIM Agent module to re-allocate and re-adjust VDC resources in the subnet.

In operation 1015, the S-VNFM module activates loading of newly expanded VNF instances in the subnet.

In operation 1016, the S-VNFM module notifies an EMS module that the new VNF instances have been loaded.

In operation 1017, the EMS module may perform network function management on the new VNF that is instantiated.

End.

### Exemplary embodiment 6: Detailed flow of deleting a network slice

Fig. 11 is a detailed flowchart of deleting a network slice according to an exemplary embodiment of the present disclosure. As shown in Fig. 11, the method includes the following operations.

In operation 1101, an inter-slice NFVO module receives a service terminating request of a user.

In operation 1102, the inter-slice NFVO module instructs a slice LCM module to delete a slice.

In operation 1103, the slice LCM module instructs a network-slice NFVO module to delete an end-to-end network service.

In operation 1104, the network-slice NFVO module instructs a subnet-slice NFVO module to delete a subnet slice.

In operation 1105, the subnet-slice NFVO module deactivates and deletes VNF instances.

In operation 1106, an SDN-O module instructs a WAN SDN controller module to delete a WAN connection.

In operation 1107, the slice LCM module instructs the SDN-O module to release the WAN connection.

In operation 1108, the slice LCM module destroys a VDC and recycles resources.

In operation 1109, the inter-slice NFVO module instructs a slice catalog module to delete a corresponding network slice blueprint instance.

End.

It is apparent that a person skilled in the art shall understand that all of the above-mentioned modules or operations in the present disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described operations may be executed in a sequence different from this sequence under certain conditions, or they are manufactured into each integrated circuit module respectively, or multiple modules or operations therein are manufactured into a single integrated circuit module. Thus, the present disclosure is not limited to the combination of any specific hardware and software.

### Industrial Applicability

As mentioned above, the embodiments of the present disclosure provide an orchestration and management system and a network slice processing method, which have the following beneficial effects: the problem in the related art that various QoS requirements cannot be satisfied for differentiated scene use cases is solved.

## Claims

1. An orchestration and management system, comprising: an inter-slice Management and Orchestration, MANO, module (12), a network-slice MANO module (14), a subnet-slice MANO module (16), and a Virtualized Network Function entity , VNF (18), wherein
the inter-slice MANO module (12) is configured to manage a life cycle of a network slice;
the network-slice MANO module (14) is located in the network slice and configured to manage a life cycle of a network service; and
the subnet-slice MANO module (16) is located in a subnet slice of the network slice and configured to manage a life cycle of the VNF (18), wherein the subnet slice is one or more subnet segments obtained by dividing the network slice according to a preset rule;
the inter-slice MANO module (12) is further configured to receive a service starting request of a user, activate loading of the network-slice MANO module (14) according to the service starting request, and instruct the network-slice MANO module (14) to create the network service, wherein the service starting request comprises Quality of Service, QoS, requirements;
the network-slice MANO module (14) is further configured to create the network service, activate loading of the subnet-slice MANO module, and issue VNF requirements into the subnet slice; and
the subnet-slice MANO module (16) is further configured to activate loading of the VNF (18).

2. The system according to claim 1, wherein
the inter-slice MANO module (12) is further configured to construct a network slice blueprint according to the service starting request, allocate and activate a computing storage resource in a Data Center, DC, according to the network slice blueprint, open a Wide Area Network (WAN) between physical DCs, and create a Virtual Data Center, VDC,
wherein the network slice blueprint comprises: requirements on the computing storage resource in the DC, a network connection topology in the DC, and an end-to-end network connection service in the DC; and
the network-slice MANO module (14) is further configured to construct a network service blueprint according to the network service, and divide the network slice into isolated subnet slices according to division of a network functional domain.

3. The system according to any one of claims 1 to 2, wherein
the inter-slice MANO module (12) comprises: a first inter-network slice Network Function Virtualization Orchestrator,NFVO, module and a first slice Life Cycle Management, LCM, module, wherein the first inter-network slice NFVO module is configured to receive the service starting request, and the first slice LCM module is configured to activate loading of the network-slice MANO module and instruct the network-slice MANO module to create the network service;
the network-slice MANO module (14) comprises: a first network slice NFVO module and a first General-Virtualized Network Function Management, G-VNFM, module, wherein the first network slice NFVO module is configured to create the network service, and the first G-VNFM module is configured to activate loading of the subnet-slice MANO module, and issue VNF requirements into the subnet slice; and
the subnet-slice MANO module (16) comprises: a first subnet-slice NFVO module and a first Specific-VNFM, S-VNFM, module, wherein the subnet-slice NFVO module is configured to instruct the first S-VNFM module to activate loading of the VNF (18), and the first S-VNFM module is configured to activate loading of the VNF (18).

4. The system according to claim 3, wherein the inter-slice MANO module (12) further comprises: a first network slice catalog module, a first Software Defined Network, SDN, orchestrator and a first WAN SDN controller, wherein the inter-network slice NFVO module is further configured to match, in the first network slice catalog module according to the service starting request, a slice template corresponding to the service starting request, and construct a network slice blueprint; the first slice LCM module is further configured to activate the network slice, instruct the first SDN orchestrator to open a WAN between physical DCs, allocate and activate a computing storage resource in the DC and create a VDC according to the network slice blueprint; and the first SDN orchestrator is configured to open the WAN between the physical DCs and instruct the WAN SDN controller to create a connection to the WAN.

5. The system according to claim 3, wherein the network-slice MANO module (14) further comprises: a first DC Software Defined Network, SDN controller and a first Virtualized Infrastructure Manager, VIM, Agent, wherein
the network-slice NFVO module is further configured to construct a network service blueprint according to the network service, divide the network slice into isolated subnet slices according to division of a network functional domain, and instruct the first G-VNFM module to activate the network service;
the first G-VNFM module is further configured to activate the network service, instruct the first DC SDN controller to open a connection in the DC, and instruct the first VIM Agent to isolate VDC resources according to a specified subnet slice;
the first DC SDN controller is configured to open the connection in the DC; and
the first VIM Agent is configured to isolate the VDC resources according to the specified subnet slice.

6. The system according to claim 3, wherein the subnet-slice MANO module (16) further comprises: a first access Software Defined Network SDN controller, a first subnet-slice Virtual Infrastructure Manager VIM Agent and a first Element Management System, EMS, wherein
the first subnet-slice NFVO module is further configured to construct a VNF blueprint;
the first S-VNFM module is further configured to instruct the first access SDN controller to open a connection between a remote node and an Edge Cloud, instruct the first subnet-slice VIM Agent to allocate and adjust VDC resources in the subnet slice, and notify the first EMS of complete loading of the VNF;
the first access SDN controller is configured to open the connection between the remote node and the Edge Cloud;
the first subnet-slice VIM Agent is configured to allocate and adjust the VDC resources in the subnet slice; and
the first EMS is configured to perform network function management on a loading completed VNF.

7. The system according to claim 1, wherein
the inter-slice MANO module (12) is further configured to receive a service changing request of a user, and instruct the network-slice MANO module to adjust a capacity of the network slice;
the network-slice MANO module (14) is further configured to change the capacity of the network slice, and instruct the subnet-slice MANO module to adjust the capacity of the subnet slice; and
the subnet-slice MANO module (16) is further configured to adjust the capacity of the subnet slice, and deactivate or activate loading of the VNF (18).

8. The system according to claim 7, wherein
the inter-slice MANO module (12) is further configured to expand or shrink the capacity of the network slice according to the service changing request, change a network slice blueprint corresponding to the network slice, and adjust and allocate computing storage resources in the DC according to the changed network slice blueprint.

9. The system according to claim 3 or 7 or 8, wherein
the inter-slice MANO module (12) further comprises: a second inter-network slice NFVO module and a second slice LCM module, wherein the second inter-network slice NFVO module is configured to receive a service changing request, and the second slice LCM module is configured to instruct the network-slice MANO module (14) to adjust a capacity of the network slice;
the network-slice MANO module (14) further comprises: a second network-slice NFVO module and a second G-VNFM module, wherein the second network-slice NFVO module is configured to change the capacity of the network slice, and the second G-VNFM module is configured to instruct the subnet-slice MANO module (16) to adjust the capacity of the subnet slice; and
the subnet-slice MANO module (16) further comprises: a second subnet-slice NFVO module and a second S-VNFM module, wherein the second subnet-slice NFVO module is configured to adjust the capacity of the subnet slice and instruct the second S-VNFM module to deactivate or activate loading of the VNF (18), and the second S-VNFM module is configured to deactivate or activate loading of the VNF (18).

10. The system according to claim 9, wherein
the inter-slice MANO module (12) further comprises: a second network slice catalog module, wherein the second inter-network slice NFVO module is further configured to change a network slice blueprint corresponding to the network slice in the second network slice catalog module according to the service changing request, and the second slice LCM module is configured to adjust computing storage resources in the DC according to the changed network slice blueprint.

11. The system according to claim 9, wherein
the network-slice MANO module (14) further comprises: a DC SDN controller, a second VIM Agent, and a Network Service blueprint , NS, catalog module, wherein
the second network-slice NFVO module is further configured to change a network service blueprint in the NS catalog module, and instruct the second G-VNFM module to adjust the network service;
the second G-VNFM module is further configured to instruct the DC SDN controller to adjust a connection in the DC, and instruct the second VIM Agent to adjust VDC resources for the subnet slice;
the DC SDN controller is configured to adjust the connection in the DC; and
the second VIM Agent is configured to adjust the VDC resources for the subnet slice.

12. The system according to claim 9, wherein the subnet-slice MANO module (16) further comprises: a second access SDN controller, a second subnet-slice VIM Agent and a second EMS, wherein
the second subnet-slice NFVO module is configured to construct a VNF blueprint;
the second S-VNFM module is further configured to instruct the second access SDN controller to open a connection between a remote node and an Edge Cloud, instruct the second subnet-slice VIM Agent to re-allocate and re-adjust VDC resources in the subnet slice, and notify the second EMS of complete loading of the VNF or complete deactivation of the VNF;
the second access SDN controller is configured to open the connection between the remote node and the Edge Cloud;
the second subnet-slice VIM Agent is configured to re-allocate and re-adjust the VDC resources in the subnet slice; and
the second EMS is configured to perform network function management on the loading completed VNF.

13. The system according to claim 1, wherein
the inter-slice MANO module (12) is further configured to receive a service terminating request of a user, and instruct the network-slice MANO module to delete the network slice;
the network-slice MANO module (14) is further configured to instruct the subnet-slice MANO module to delete the subnet slice; and
the subnet-slice MANO module (16) is further configured to deactivate and delete all the VNFs.

14. The system according to claim 13, wherein the inter-slice MANO module (12) is further configured to delete a VDC, recycle computing storage resources, release a connection of a WAN, and delete a network slice blueprint.

15. The system according to claim 9 or 13 or 14, wherein the inter-slice MANO module (12) further comprises: a third inter-network slice NFVO module and a third slice LCM module, wherein the third inter-network slice NFVO module is configured to receive a service terminating request, and the third slice LCM module is configured to delete an end-to-end network service.

16. The system according to claim 15, wherein the inter-slice MANO module (12) further comprises: a third network slice catalog module, a second SDN orchestrator and a second WAN SDN controller, wherein
the second SDN orchestrator is configured to instruct the second WAN SDN controller to delete a connection of the WAN and release the connection of the WAN;
the third slice LCM module is further configured to delete the VDC and recycle computing storage resources; and
the third inter-network slice NFVO module is further configured to instruct the third network slice catalog module to delete the network slice blueprint.

17. A network slice processing method, performed by an orchestration and management system according to any one of claims 1 to 16, the method comprising:
receiving, by an inter-slice Management and Orchestration, MANO, module, a service starting request of a user, activating loading of a network-slice MANO module according to the service starting request, and instructing the network-slice MANO module to create a network service, wherein the service starting request comprises Quality of Service, QoS, requirements;
creating, by the network-slice MANO module, the network service, activating loading of a subnet-slice MANO module, and issuing Virtualized Network Function (VNF) requirements into a subnet slice; and
activating, by the subnet-slice MANO module, loading of the VNF.

18. A storage medium, comprising a stored computer program which when executed on a processor performs all the steps of the method according to claim 17.

## Patentansprüche

1. Orchestrierungs- und Verwaltungssystem, umfassend: ein Inter-Schicht-Verwaltungs- und -Orchestrierungs, MANO, -Modul (12), ein Netzwerkschicht-MANO-Modul (14), ein Subnetzschicht-MANO-Modul (16) und eine virtualisierte Netzwerkfunktions-Entität, VNF (18), wobei
das Inter-Schicht-MANO-Modul (12) konfiguriert ist, um einen Lebenszyklus eines Netzwerkschicht zu verwalten;
das Netzwerkschicht-MANO-Modul (14) sich in der Netzwerkschicht befindet und konfiguriert ist, um einen Lebenszyklus eines Netzwerkdienstes zu verwalten; und
das Subnetzschicht-MANO-Modul (16) sich in einer Subnetzschicht der Netzwerkschicht befindet und konfiguriert ist, um einen Lebenszyklus der VNF (18) zu verwalten, wobei die Subnetzschicht ein oder mehrere Subnetz-Segmente ist, die durch Aufteilen der Netzwerkschicht nach einer voreingestellten Regel erhalten werden;
das Inter-Schicht-MANO-Modul (12) ferner konfiguriert ist, um eine Dienststartanforderung eines Benutzers zu empfangen, das Laden des Netzwerkschicht-MANO-Moduls (14) gemäß der Dienststartanforderung zu aktivieren und das Netzwerkschicht-MANO-Modul (14) anzuweisen, den Netzwerkdienst zu erstellen, wobei die Dienststartanforderung Servicequalitäts, QoS, -Anforderungen umfasst;
das Netzwerkschicht-MANO-Modul (14) ferner konfiguriert ist, den Netzwerkdienst zu erstellen, das Laden des Subnetzschicht-MANO-Moduls zu aktivieren und VNF-Anforderungen in die Subnetzschicht auszugeben; und
das Subnetzschicht-MANO-Modul (16) ferner konfiguriert ist, um das Laden der VNF (18) zu aktivieren.

2. System nach Anspruch 1, wobei
das Inter-Schicht-MANO-Modul (12) ferner konfiguriert ist, einen Netzwerkschicht-Entwurf gemäß der Dienststartanforderung zu konstruieren, eine Rechenspeicherressource in einem Daten-Center, DC, gemäß dem Netzwerkschicht-Entwurf zuzuweisen und zu aktivieren, ein Weitverkehrsnetzwerk (WAN) zwischen physischen DCs zu öffnen und ein virtuelles Datencenter, VDC zu erstellen, wobei der Netzwerkschicht-Entwurf umfasst: Anforderungen an die Rechenspeicherressource im DC, eine Netzwerkverbindungstopologie im DC und einen End-to-End-Netzwerkverbindungsdienst im DC; und
das Netzwerkschicht-MANO-Modul (14) ferner konfiguriert ist, um einen Netzwerkdienst-Entwurf gemäß dem Netzwerkdienst zu konstruieren und die Netzwerkschicht gemäß der Aufteilung einer Netzwerkfunktionsdomäne in isolierte Subnetzschichten aufzuteilen.

3. System nach einem der Ansprüche 1 bis 2, wobei
das Inter-Schicht-MANO-Modul (12) umfasst: ein erstes Inter-Netzwerkschicht-Netzwerkfunktionsvirtualisierungs-Orchestrator, NFVO, -Modul und ein erstes Inter-Netzwerkschicht-NFVO-Modul, wobei das erste Inter-Netzwerkschicht-NFVO-Modul konfiguriert ist, um die Dienststartanforderung zu empfangen, und das erste Schicht-LCM-Modul konfiguriert ist, um das Laden des Netzwerkschicht-MANO-Moduls zu aktivieren und das Netzwerkschicht-MANO-Modul anzuweisen, den Netzwerkdienst zu erstellen;
das Netzwerkschicht-MANO-Modul (14) umfasst: ein erstes Netzwerkschicht-NFVO-Modul und ein erstes General-Virtualized Netzwerkfunktionsmanagement, G-VNFM, -Modul, wobei das erste Netzwerkschicht-NFVO-Modul konfiguriert ist, um den Netzwerkdienst zu erstellen, und das erste G-VNFM-Modul konfiguriert ist, um das Laden des Subnetzschicht-MANO-Moduls zu aktivieren und VNF-Anforderungen in die Subnetzschicht auszugeben; und
das Subnetzschicht-MANO-Modul (16) umfasst: ein erstes Subnetzschicht-NFVO-Modul und ein erstes Specific-VNFM, S-VNFM, -Modul, wobei das Subnetzschicht-NFVO-Modul konfiguriert ist, um das erste S-VNFM-Modul anzuweisen, das Laden der VNF (18) zu aktivieren, und das erste S-VNFM-Modul konfiguriert ist, um das Laden der VNF (18) zu aktivieren.

4. System nach Anspruch 3, wobei das Inter-Schicht-MANO-Modul (12) ferner umfasst: ein erstes Netzwerkschicht-Katalogmodul, einen ersten softwaredefiniertes-Netzwerk, SDN, -Orchestrator und einen ersten WAN-SDN-Controller, wobei das Inter-Netzwerkschicht NFVO-Modul ferner konfiguriert ist, um in dem ersten Netzwerkschicht-Katalogmodul gemäß der Dienststartanforderung einen Schicht-Entwurf entsprechend der Dienststartanforderung abzugleichen und einen Netzwerkschicht-Entwurf zu erstellen; das LCM-Modul des ersten Abschnitts ferner konfiguriert ist, um den Netzwerkabschnitt zu aktivieren, den ersten SDN-Orchestrator anzuweisen, ein WAN zwischen physischen DCs zu öffnen, eine Rechenspeicherressource im DC zuzuweisen und zu aktivieren und ein VDC gemäß dem Netzwerkschicht-Entwurf zu erstellen; und der erste SDN-Orchestrator konfiguriert ist, um das WAN zwischen den physischen DCs zu öffnen und den WAN-SDN-Controller anzuweisen, eine Verbindung zum WAN zu erstellen.

5. System nach Anspruch 3, wobei das Netzwerkschicht-MANO-Modul (14) ferner umfasst: einen ersten DC-software-definiertes-Netzwerk, SDN, -Controller und einen ersten Virtualized Infrastructure Manager, VIM, -Agenten, wobei
das Netzwerkschicht-NFVO-Modul ferner konfiguriert ist, um einen Netzwerkdienst-Entwurf gemäß dem Netzwerkdienst zu konstruieren, die Netzwerkschicht gemäß der Aufteilung einer Netzwerkfunktionsdomäne in isolierte Subnetzschichten aufzuteilen und das erste G-VNFM-Modul anzuweisen, den Netzwerkdienst zu aktivieren;
das erste G-VNFM-Modul ferner konfiguriert ist, um den Netzwerkdienst zu aktivieren, den ersten DC-SDN-Controller anzuweisen, eine Verbindung im DC zu öffnen, und den ersten VIM-Agenten anzuweisen, VDC-Ressourcen gemäß einer spezifizierten Subnetzschicht zu isolieren;
der erste DC-SDN-Controller konfiguriert ist, um die Verbindung im DC zu öffnen; und
der erste VIM-Agent konfiguriert ist, um die VDC-Ressourcen gemäß der spezifizierten Subnetzschicht zu isolieren.

6. System nach Anspruch 3, wobei das Subnetzschicht-MANO-Modul (16) ferner umfasst: einen software-definiertes-Netzwerk, SDN, -Controller für den ersten Zugriff, einen virtuellen Infrastructure-Manager, VIM, -Agenten des ersten Subnetzschicht-Virtual Infrastructure Managers und ein erstes Elementverwaltungssystem, EMS, wobei
das erste Subnetzschicht-NFVO-Modul ferner konfiguriert ist, um einen VNF-Entwurf zu konstruieren;
das erste S-VNFM-Modul ferner konfiguriert ist, um den ersten Zugriffs-SDN-Controller anzuweisen, eine Verbindung zwischen einem Remote-Knoten und einer Edge Cloud zu öffnen, den ersten Subnetzschicht-VIM-Agenten anzuweisen, VDC-Ressourcen in der Subnetzschicht zuzuweisen und einzustellen, und das erste EMS bei vollständigem Laden der VNF zu benachrichtigen;
der erste Zugriffs-SDN-Controller konfiguriert ist, um die Verbindung zwischen dem Remote-Knoten und der Edge Cloud zu öffnen;
der erste Subnetzschicht-VIM-Agent konfiguriert ist, um die VDC-Ressourcen in der Subnetzschicht zuzuweisen und einzustellen; und
das erste EMS ist konfiguriert ist, um eine Netzwerkfunktionsverwaltung bei einem Laden der VNF durchzuführen.

7. System nach Anspruch 1, wobei
das Inter-Schicht-MANO-Modul (12) ferner konfiguriert ist, um eine Dienständerungsanforderung eines Benutzers zu empfangen und das Netzwerkschicht-MANO-Modul anzuweisen, eine Kapazität der Netzwerkschicht einzustellen;
das Netzwerkschicht-MANO-Modul (14) ferner konfiguriert ist, um die Kapazität der Netzwerkschicht zu ändern und das Subnetzschicht-MANO-Modul anzuweisen, die Kapazität der Subnetzschicht einzustellen; und
das Subnetzschicht-MANO-Modul (16) ferner konfiguriert ist, um die Kapazität der Subnetzschicht einzustellen und das Laden der VNF (18) zu deaktivieren oder zu aktivieren.

8. System nach Anspruch 7, wobei
das Inter-Schicht-MANO-Modul (12) ferner konfiguriert ist, um die Kapazität der Netzwerkschicht gemäß der Dienständerungsanforderung zu erweitern oder zu verkleinern, einen Netzwerkschicht-Entwurf entsprechend der Netzwerkschicht zu ändern und Rechenspeicherressourcen im DC gemäß dem geänderten Netzwerkschicht-Entwurf einzustellen und zuzuweisen.

9. System nach Anspruch 3 oder 7 oder 8, wobei das Inter-Schicht-MANO-Modul (12) ferner umfasst: ein zweites Inter-Netzwerkschicht-NFVO-Modul und ein zweites Schicht-LCM-Modul, wobei das zweite Inter-Netzwerkschicht-NFVO-Modul konfiguriert ist, um eine Dienständerungsanforderung zu empfangen, und das zweite Schicht-LCM-Modul konfiguriert ist, um das Netzwerkschicht-MANO-Modul (14) anzuweisen, eine Kapazität der Netzwerkschicht einzustellen;
das Netzwerkschicht-MANO-Modul (14) ferner umfasst: ein zweites Netzwerkschicht-NFVO-Modul und ein zweites G-VNFM-Modul, wobei das zweite Netzwerkschicht-NFVO-Modul konfiguriert ist, um die Kapazität der Netzwerkschicht zu ändern, und das zweite G-VNFM-Modul konfiguriert ist, um das Subnetzschicht-MANO-Modul (16) anzuweisen, die Kapazität der Subnetzschicht einzustellen; und
das Subnetzschicht-MANO-Modul (16) ferner umfasst: ein zweites Subnetzschicht-NFVO-Modul und ein zweites S-VNFM-Modul, wobei das zweite Subnetzschicht-NFVO-Modul konfiguriert ist, um die Kapazität der Subnetzschicht einzustellen und das zweite S-VNFM-Modul anzuweisen, das Laden der VNF (18) zu deaktivieren oder zu aktivieren, und das zweite S-VNFM-Modul konfiguriert ist, um das Laden der VNF (18) zu aktivieren oder zu deaktivieren.

10. System nach Anspruch 9, wobei
das Inter-Schicht-MANO-Modul (12) ferner umfasst: ein zweites Netzwerkschicht-Katalogmodul, wobei das zweite Inter-Netzwerkschicht-NFVO-Modul ferner konfiguriert ist, um einen Netzwerkschicht-Entwurf entsprechend der Netzwerkschicht in dem zweiten Netzwerkschicht-Katalogmodul gemäß der Dienständerungsanforderung zu ändern, und das zweite Schicht-LCM-Modul konfiguriert ist, um Rechenspeicherressourcen im DC gemäß dem geänderten Netzwerkschicht-Entwurf einzustellen.

11. System nach Anspruch 9, wobei
das Netzwerkschicht-MANO-Modul (14) ferner umfasst: einen DC-SDN-Controller, einen zweiten VIM-Agenten und ein Netzwerkdienst-Entwurfs, NS, -Katalogmodul, wobei
das zweite Netzwerkschicht-NFVO-Modul ferner konfiguriert ist, um einen Netzwerkdienst-Entwurf im NS-Katalogmodul zu ändern und das zweite G-VNFM-Modul anzuweisen, den Netzwerkdienst einzustellen;
das zweite G-VNFM-Modul ferner konfiguriert ist, um den DC-SDN-Controller anzuweisen, eine Verbindung im DC einzustellen, und den zweiten VIM-Agenten anzuweisen, VDC-Ressourcen für die Subnetzschicht einzustellen;
der DC-SDN-Controller konfiguriert ist, um die Verbindung im DC einzustellen; und
der zweite VIM-Agent konfiguriert ist, um die VDC-Ressourcen für die Subnetzschicht einzustellen.

12. System nach Anspruch 9, wobei das Subnetzschicht-MANO-Modul (16) ferner umfasst: einen zweiten Zugangs-SDN-Controller, einen zweiten Subnetzschicht-VIM-Agenten und ein zweites EMS, wobei
das zweite Subnetzschicht-NFVO-Modul konfiguriert ist, um einen VNF-Entwurf zu konstruieren;
das zweite S-VNFM-Modul ferner konfiguriert ist, um den zweiten Zugangs-SDN-Controller anzuweisen, eine Verbindung zwischen einem Remote-Knoten und einer Edge Cloud zu öffnen, den zweiten Subnetzschicht-VIM-Agenten anzuweisen, VDC-Ressourcen in der Subnetzschicht neu zuzuweisen und einzustellen, und das zweite EMS über das vollständige Laden der VNF oder die vollständige Deaktivierung der VNF zu benachrichtigen;
der zweite Zugriffs-SDN-Controller konfiguriert ist, um die Verbindung zwischen dem Remote-Knoten und der Edge Cloud zu öffnen;
der zweite Subnetzschicht-VIM-Agent konfiguriert ist, um die VDC-Ressourcen in der Subnetzschicht neu zuzuweisen und neu einzustellen; und
das zweite EMS konfiguriert ist, um eine Netzwerkfunktionsverwaltung des vollständigen Ladens des VNF durchzuführen.

13. System nach Anspruch 1, wobei
das Inter-Schicht-MANO-Modul (12) ferner konfiguriert ist, um eine Dienstbeendigungsanforderung eines Benutzers zu empfangen und das Netzwerkschicht-MANO-Modul anzuweisen, die Netzwerkschicht zu löschen;
das Netzwerkschicht-MANO-Modul (14) ferner konfiguriert ist, um das Subnetzschicht-MANO-Modul anzuweisen, die Subnetzschicht zu löschen; und
das Subnetzschicht-MANO-Modul (16) ferner konfiguriert ist, um alle VNFs zu deaktivieren und zu löschen.

14. System nach Anspruch 13, wobei das Inter-Schicht-MANO-Modul (12) ferner konfiguriert ist, um ein VDC zu löschen, Rechenspeicherressourcen zu recyceln, eine Verbindung eines WAN freizugeben und einen Netzwerkschicht-Entwurf zu löschen.

15. System nach Anspruch 9 oder 13 oder 14, wobei das Inter-Schicht-MANO-Modul (12) ferner umfasst: ein drittes Inter-Netzwerkschicht-NFVO-Modul und ein drittes Schicht-LCM-Modul, wobei das dritte Inter-Netzwerkschicht-NFVO-Modul konfiguriert ist, um eine Dienstbeendigungsanforderung zu empfangen, und das dritte Schicht-LCM-Modul konfiguriert ist, um einen Ende-zu-Ende-Netzwerkdienst zu löschen.

16. System nach Anspruch 15, wobei das Inter-Schicht-MANO-Modul (12) ferner umfasst: ein drittes Netzwerkschicht-Katalogmodul, einen zweiten SDN-Orchestrator und einen zweiten WAN-SDN-Controller, wobei
der zweite SDN-Orchestrator konfiguriert ist, um den zweiten WAN-SDN-Controller anzuweisen, eine Verbindung des WAN zu löschen und die Verbindung des WAN freizugeben;
das dritte Schicht-LCM-Modul ferner konfiguriert ist, um das VDC zu löschen und Rechenspeicherressourcen zu recyceln; und
das dritte Inter-Netzwerkschicht-NFVO-Modul ferner konfiguriert ist, um das dritte Netzwerkschicht-Katalogmodul anzuweisen, den Netzwerkschicht-Entwurf zu löschen.

17. Netzwerkschicht-Verarbeitungsverfahren, durchgeführt von einem Orchestrierungs- und Verwaltungssystem nach einem der Ansprüche 1 bis 16, das Verfahren umfassend:
Empfangen einer Dienststartanforderung eines Benutzers durch ein Inter-Schicht-Verwaltungs- und -Orchestrierungs, MANO, -Modul, Aktivieren des Ladens eines Netzwerkschicht-MANO-Moduls gemäß der Dienststartanforderung und Anweisen des Netzwerkschicht-MANO-Moduls, einen Netzwerkdienst zu erstellen, wobei die Dienststartanforderung Servicequalitäts, QoS, -Anforderungen umfasst;
Erstellen des Netzwerkdienstes durch das Netzwerkschicht-MANO-Modul, Aktivieren des Ladens eines Subnetzschicht-MANO-Moduls und Ausgeben von Anforderungen an virtualisierte Netzwerkfunktions, (VNF), -Anforderungen in einen Subnetzschicht; und
Aktivieren des Ladens der VNF durch das Subnetzschicht-MANO-Modul.

18. Speichermedium, das ein gespeichertes Computerprogramm umfasst, das, wenn es auf einem Prozessor ausgeführt wird, alle Schritte des Verfahrens nach Anspruch 17 durchführt.

## Revendications

1. Système d'orchestration et de gestion comprenant : un module de gestion et d'orchestration inter-tranche, MANO (12), un module MANO de tranche de réseau (14), un module MANO de tranche de sous-réseau (16) et une entité de fonction de réseau virtualisé, VNF (18), dans lequel
le module MANO inter-tranche (12) est configuré pour gérer un cycle de vie d'une tranche de réseau ;
le module MANO de tranche de réseau (14) est situé dans la tranche de réseau et configuré pour gérer un cycle de vie d'un service de réseau ; et
le module MANO de tranche de sous-réseau (16) est situé dans une tranche de sous-réseau de la tranche de réseau et configuré pour gérer un cycle de vie de la VNF (18), dans lequel la tranche de sous-réseau est un ou plusieurs segments de sous-réseau obtenus en divisant la tranche de réseau selon une règle prédéfinie ;
le module MANO inter-tranche (12) est en outre configuré pour recevoir une requête de démarrage de service d'un utilisateur, activer le chargement du module MANO de tranche de réseau (14) selon la requête de démarrage de service et ordonner au module MANO de tranche de réseau (14) de créer le service de réseau, dans lequel la requête de démarrage de service comprend des exigences de qualité de service, QoS ;
le module MANO de tranche de réseau (14) est en outre configuré pour créer le service de réseau, activer le chargement du module MANO de tranche de sous-réseau et émettre des exigences de VNF dans la tranche de sous-réseau ; et
le module MANO de tranche de sous-réseau (16) est en outre configuré pour activer le chargement de la VNF (18).

2. Système selon la revendication 1, dans lequel
le module MANO inter-tranche (12) est en outre configuré pour construire une ébauche de tranche de réseau selon la requête de démarrage de service, attribuer et activer une ressource de stockage informatique dans un centre de données, DC, selon l'ébauche de tranche de réseau, ouvrir un réseau étendu (WAN) entre les DC physiques et créer un centre de données virtuel, VDC, dans lequel l'ébauche de tranche de réseau comprend : les exigences relatives à la ressource de stockage informatique dans le DC, une topologie de connexion réseau dans le DC et un service de connexion réseau de bout en bout dans le DC ; et
le module MANO de tranche de réseau (14) est en outre configuré pour construire une ébauche de service de réseau selon le service de réseau et diviser la tranche de réseau en tranches de sous-réseau isolées selon la division d'un domaine fonctionnel de réseau.

3. Procédé selon l'une quelconque des revendications 1 à 2, dans lequel
le module MANO inter-tranche (12) comprend : un premier module d'orchestrateur de virtualisation de fonction de réseau, NFVO, de tranche inter-réseau et un premier module de gestion de cycle de vie, LCM, de tranche, dans lequel le premier module NFVO de tranche inter-réseau est configuré pour recevoir la requête de démarrage de service et le premier module LCM de tranche est configuré pour activer le chargement du module MANO de tranche de réseau et ordonner au module MANO de tranche de réseau de créer le service de réseau ;
le module MANO de tranche de réseau (14) comprend : un premier module NFVO de tranche de réseau et un premier module de gestion de fonction de réseau général virtualisé, G-VNFM, dans lequel le premier module NFVO de tranche de réseau est configuré pour créer le service de réseau et le premier module G-VNFM est configuré pour activer le chargement du module MANO de tranche de sous-réseau et émettre les exigences de VNF dans la tranche de sous-réseau ; et
le module MANO de tranche de sous-réseau (16) comprend : un premier module NFVO de tranche de sous-réseau et un premier module spécifique à VNFM, S-VNFM, dans lequel le module NFVO de tranche de sous-réseau est configuré pour ordonner au premier module S-VNFM d'activer le chargement de la VNF (18) et le premier module S-VNFM est configuré pour activer le chargement de la VNF (18).

4. Système selon la revendication 3, dans lequel le module MANO inter-tranche (12) comprend en outre : un premier module de catalogue de tranches de réseau, un premier orchestrateur de réseau défini par logiciel, SDN, et un premier contrôleur de SDN de WAN, dans lequel le module NFVO de tranche inter-réseau est en outre configuré pour correspondre, dans le premier module de catalogue de tranches de réseau en fonction de la requête de démarrage de service, à un modèle de tranche correspondant à la requête de démarrage de service et construire une ébauche de tranche de réseau ; le premier module LCM de tranche est en outre configuré pour activer la tranche de réseau, ordonner au premier orchestrateur SDN d'ouvrir un WAN entre des DC physiques, attribuer et activer une ressource de stockage informatique dans le DC et créer un VDC selon l'ébauche de tranche de réseau ; et le premier orchestrateur SDN est configuré pour ouvrir le WAN entre les DC physiques et ordonner au contrôleur SDN de WAN de créer une connexion avec le WAN.

5. Système selon la revendication 3, dans lequel le module MANO de tranche de réseau (14) comprend en outre : un premier contrôleur de réseau défini par logiciel DC, SDN, et un premier agent de gestionnaire d'infrastructure virtualisée, VIM, dans lequel
le module NFVO de tranche de réseau est en outre configuré pour construire une ébauche de service de réseau selon le service de réseau, diviser la tranche de réseau en tranches de sous-réseau isolées selon la division d'un domaine fonctionnel de réseau et ordonner au premier module G-VNFM d'activer le réseau de service ;
le premier module G-VNFM est en outre configuré pour activer le service de réseau, ordonner au premier contrôleur SDN de DC d'ouvrir une connexion dans le DC et ordonner au premier agent VIM d'isoler des ressources VDC selon une tranche de sous-réseau spécifiée ;
le premier contrôleur SDN de DC est configuré pour ouvrir la connexion dans le DC ; et
le premier agent VIM est configuré pour isoler les ressources VDC en fonction de la tranche de sous-réseau spécifiée.

6. Système selon la revendication 3, dans lequel le module MANO de tranche de sous-réseau (16) comprend en outre : un premier contrôleur de réseau défini par logiciel, SDN, d'accès, un premier agent de gestionnaire d'infrastructure virtuelle, VIM, de tranche de sous-réseau et un premier système de gestion d'éléments, EMS, dans lequel
le premier module NFVO de tranche de sous-réseau est en outre configuré pour construire une ébauche de VNF ;
le premier module S-VNFM est en outre configuré pour ordonner au premier contrôleur SDN d'accès d'ouvrir une connexion entre un nœud distant et un nuage périphérique, ordonner au premier agent VIM de tranche de sous-réseau d'allouer et d'ajuster les ressources VDC dans la tranche de sous-réseau et notifier le premier EMS du chargement complet de la VNF ;
le premier contrôleur SDN d'accès est configuré pour ouvrir la connexion entre le nœud distant et le nuage périphérique ;
le premier agent VIM de tranche de sous-réseau est configuré pour attribuer et ajuster les ressources VDC dans la tranche de sous-réseau ; et
le premier EMS est configuré pour réaliser une gestion de fonction de réseau sur une VNF dont le chargement est terminé.

7. Système selon la revendication 1, dans lequel
le module MANO inter-tranche (12) est en outre configuré pour recevoir une requête de modification de service d'un utilisateur et ordonner au module MANO de tranche de réseau d'ajuster une capacité de la tranche de réseau ;
le module MANO de tranche de réseau (14) est en outre configuré pour modifier la capacité de la tranche de réseau et ordonner au module MANO de tranche de sous-réseau d'ajuster la capacité de la tranche de sous-réseau ; et
le module MANO de tranche de sous-réseau (16) est en outre configuré pour ajuster la capacité de la tranche de sous-réseau et désactiver ou activer le chargement de la VNF (18).

8. Système selon la revendication 7, dans lequel
le module MANO inter-tranche (12) est en outre configuré pour étendre ou réduire la capacité de la tranche de réseau en fonction de la requête de modification de service, modifier une ébauche de tranche de réseau correspondant à la tranche de réseau et ajuster et attribuer des ressources de stockage informatique dans le DC selon l'ébauche de tranche de réseau modifiée.

9. Système selon la revendication 3, 7 ou 8, dans lequel le module MANO inter-tranche (12) comprend en outre : un deuxième module NFVO de tranche inter-réseau et un deuxième module LCM de tranche, dans lequel le deuxième module NFVO de tranche inter-réseau est configuré pour recevoir une requête de changement de service et le deuxième module LCM de tranche est configuré pour ordonner au module MANO de tranche de réseau (14) d'ajuster une capacité de la tranche de réseau ;
le module MANO de tranche de réseau (14) comprend en outre : un second module NFVO de tranche de réseau et un second module G-VNFM, dans lequel le second module NFVO de tranche de réseau est configuré pour modifier la capacité de la tranche de réseau et le second module G-VNFM est configuré pour ordonner au module MANO de tranche de sous-réseau (16) d'ajuster la capacité de la tranche de sous-réseau ; et
le module MANO de tranche de sous-réseau (16) comprend en outre: un second module NFVO de tranche de sous-réseau et un second module S-VNFM, dans lequel le second module NFVO de tranche de sous-réseau est configuré pour ajuster la capacité de la tranche de sous-réseau et ordonner au second module S-VNFM de désactiver ou d'activer le chargement de la VNF (18) et le second module S-VNFM est configuré pour désactiver ou activer le chargement de la VNF (18).

10. Système selon la revendication 9, dans lequel
le module MANO inter-tranche (12) comprend en outre: un deuxième module de catalogue de tranches de réseau, dans lequel le deuxième module NFVO de tranche inter-réseau est en outre configuré pour modifier une ébauche de tranche de réseau correspondant à la tranche de réseau dans le deuxième module de catalogue de tranches de réseau selon la requête de modification de service et le deuxième module LCM de tranche est configuré pour ajuster des ressources de stockage informatique dans le DC en fonction de l'ébauche de tranche de réseau modifiée.

11. Système selon la revendication 9, dans lequel
le module MANO de tranche de réseau (14) comprend en outre : un contrôleur SDN de DC, un second agent VIM et un module de catalogue d'ébauches de service de réseau, NS, dans lequel
le second module NFVO de tranche de réseau est en outre configuré pour modifier une ébauche de service de réseau dans le module de catalogue de NS et ordonner au second module G-VNFM d'ajuster le service de réseau ;
le second module G-VNFM est en outre configuré pour ordonner au contrôleur SDN de DC d'ajuster une connexion dans le DC et ordonner au second agent VIM d'ajuster les ressources VDC pour la tranche de sous-réseau ;
le contrôleur SDN de DC est configuré pour ajuster la connexion dans le DC ; et
le second agent VIM est configuré pour ajuster les ressources VDC pour la tranche de sous-réseau.

12. Système selon la revendication 9, dans lequel le module MANO de tranche de sous-réseau (16) comprend en outre : un second contrôleur SDN d'accès, un second agent VIM de tranche de sous-réseau et un second EMS, dans lequel
le second module NFVO de tranche de sous-réseau est configuré pour construire une ébauche de VNF ;
le second module S-VNFM est en outre configuré pour ordonner au second contrôleur SDN d'accès d'ouvrir une connexion entre un nœud distant et un nuage périphérique, ordonner au second agent VIM de tranche de sous-réseau d'allouer à nouveau et d'ajuster à nouveau les ressources VDC dans la tranche de sous-réseau et notifier le second EMS du chargement complet de la VNF ou de la désactivation complète de la VNF ;
le second contrôleur SDN d'accès est configuré pour ouvrir la connexion entre le nœud distant et le nuage périphérique ;
le second agent VIM de tranche de sous-réseau est configuré pour attribuer de nouveau et ajuster de nouveau les ressources VDC dans la tranche de sous-réseau ; et
le second EMS est configuré pour réaliser une gestion de fonction de réseau sur le chargement de VNF terminé.

13. Système selon la revendication 1, dans lequel
le module MANO inter-tranche (12) est en outre configuré pour recevoir une requête de terminaison de service d'un utilisateur et ordonner au module MANO de tranche de réseau de supprimer la tranche de réseau ;
le module MANO de tranche de réseau (14) est en outre configuré pour ordonner au module MANO de tranche de sous-réseau de supprimer la tranche de sous-réseau ; et
le module MANO de tranche de sous-réseau (16) est en outre configuré pour désactiver et supprimer toutes les VNF.

14. Système selon la revendication 13, dans lequel le module MANO inter-tranche (12) est en outre configuré pour supprimer un VDC, recycler des ressources de stockage informatique, libérer une connexion d'un WAN et supprimer une ébauche de tranche de réseau.

15. Système selon la revendication 9, 13 ou 14, dans lequel le module MANO inter-tranche (12) comprend en outre : un troisième module NFVO de tranche inter-réseau et un troisième module LCM de tranche, dans lequel le troisième module NFVO de tranche inter-réseau est configuré pour recevoir une requête de terminaison de service et le troisième module LCM de tranche est configuré pour supprimer un service de réseau de bout en bout.

16. Système selon la revendication 15, dans lequel le module MANO inter-tranche (12) comprend en outre : un troisième module de catalogue de tranches de réseau, un second orchestrateur SDN et un second contrôleur SDN de WAN, dans lequel
le second orchestrateur SDN est configuré pour ordonner au second contrôleur SDN de WAN de supprimer une connexion du WAN et de libérer la connexion du WAN ;
le troisième module LCM de tranche est en outre configuré pour supprimer le VDC et recycler les ressources de stockage informatique ; et
le troisième module NFVO de tranche inter-réseau est en outre configuré pour ordonner au troisième module de catalogue de tranches de réseau de supprimer l'ébauche de tranche de réseau.

17. Procédé de traitement de tranche de réseau, réalisé par un système d'orchestration et de gestion selon l'une quelconque des revendications 1 à 16, le procédé comprenant :
la réception, par un module de gestion et d'orchestration, MANO, inter-tranche, d'une requête de démarrage de service d'un utilisateur, l'activation du chargement d'un module MANO de tranche de réseau en fonction de la requête de démarrage de service et l'ordre donné au module MANO de tranche de réseau de créer un service de réseau, dans lequel la requête de démarrage de service comprend des exigences de qualité de service, QoS ;
la création, par le module MANO de tranche de réseau, du service de réseau, l'activation du chargement d'un module MANO de tranche de sous-réseau et l'émission d'exigences de fonction de réseau virtualisé (VNF) dans une tranche de sous-réseau ; et
l'activation, par le module MANO de tranche de sous-réseau, du chargement de la VNF.

18. Support de stockage, comprenant un programme informatique stocké qui, lorsqu'il est exécuté sur un processeur, réalise toutes les étapes du procédé selon la revendication 17.
